# EUROPEAN PATENT APPLICATION

(11) **EP 4 579 217 A1**
(43) Date of publication of application: **02.07.2025**
(21) Application number: 23871784.7
(22) Date of filing: 06.09.2023
(51) Int. Cl.: G01N 21/05, G01N 21/65

(54) **SENSOR PORTION OF SPECTROSCOPIC ANALYSIS DEVICE, MEASURING SYSTEM, AND MEASURING METHOD**

(30) Priority: 30.09.2022 JP 2022158866
(71) Applicant: FUJIFILM Corporation, Tokyo Tokyo 106-8620 (JP)
(72) Inventor: NISHI, Takayuki, Ashigarakami-gun, Kanagawa 258-8577 (JP); HASEGAWA, Masataka, Ashigarakami-gun, Kanagawa 258-8577 (JP)
(74) Representative: Hoffmann Eitle
(86) International application number: PCT/JP2023/032536
(87) International publication number: WO 2024/070544

(57) **Abstract**

A sensor unit of a spectroscopic analysis apparatus includes a distal end portion that includes a built-in optical system for irradiating a measurement target substance for physical property data with measurement light to take in return light from the measurement target substance and that is attached to a container for fluid containing the measurement target substance, in which the distal end portion includes a facing wall surface that faces an emission surface of the measurement light of the optical system, and a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

## Description

### BACKGROUND OF THE INVENTION

### 1. Field of the Invention

The present disclosed technology relates to a sensor unit of a spectroscopic analysis apparatus, a measurement system, and a measurement method.

### 2. Description of the Related Art

A spectroscopic analysis apparatus includes a sensor unit. An optical system for irradiating a measurement target substance for physical property data with measurement light and taking in return light from the measurement target substance is built in a distal end portion of the sensor unit. The distal end portion may be attached to a flow cell as described in JP2020-511635A. The flow cell has a flow channel through which fluid containing the measurement target substance flows. The flow cell is a type of container for the fluid containing the measurement target substance. JP2020-511635A describes the flow cell having various flow channel diameters.

JP2021-048872A describes the sensor unit in which a leg portion having an L-shaped cross section is provided in the front of the optical system (transparent element). The leg portion has an end portion that faces an emission surface of the measurement light of the optical system at a certain interval.

### SUMMARY OF THE INVENTION

As described in JP2020-511635A, there are various flow channel diameters of the flow cell. Therefore, an interval between a focusing position of the measurement light from the optical system and a wall surface of the flow channel facing the emission surface of the measurement light of the optical system is widened or narrowed by the flow channel diameter. In this case, even in a case in which the same measurement target substance is measured, the physical property data is different depending on the flow channel diameter of the flow cell. Specifically, in a case in which the flow channel diameter of the flow cell is relatively large and the interval between the focusing position and the wall surface of the flow channel facing the emission surface is relatively large, an intensity value of the physical property data is overall lower than in a case in which the flow channel diameter of the flow cell is relatively small and the interval between the focusing position and the wall surface of the flow channel facing the emission surface is relatively small.

JP2021-048872A provides the leg portion having the end portion facing the emission surface of the measurement light of the optical system at a certain interval. The leg portion in JP2021-048872A has an L-shaped cross section and is open except for a portion connected to the end portion. Therefore, for example, in a case in which the flow cell contains a resin, a new problem occurs in that the measurement light leaking out from the open portion of the leg portion is emitted to the resin of the flow cell, and the return light is taken in from the open portion, which adversely affects the physical property data.

One embodiment according to the present disclosed technology provides a sensor unit of a spectroscopic analysis apparatus, a measurement system, and a measurement method that can reduce a risk of an adverse influence on the physical property data.

The present disclosure provides a sensor unit of a spectroscopic analysis apparatus, the sensor unit comprising: a distal end portion that includes a built-in optical system for irradiating a measurement target substance for physical property data with measurement light to take in return light from the measurement target substance and that is attached to a container for fluid containing the measurement target substance, in which the distal end portion includes a facing wall surface that faces an emission surface of the measurement light of the optical system, and a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

It is preferable that the container is a flow cell having a flow channel through which the fluid flows.

It is preferable that the distal end portion is attached to the flow cell containing a resin.

It is preferable that the distal end portion is attached to a plurality of types of the flow cells having different flow channel diameters.

It is preferable that a metal is disposed on at least a part of a surface of the facing wall surface.

It is preferable that an area of the metal on the facing wall surface is larger than an irradiation area of the measurement light on the facing wall surface.

It is preferable that a surface roughness of the facing wall surface is equal to or less than 1.6 µm.

It is preferable that the facing wall surface is a flat surface.

It is preferable that, in a case in which the emission surface side is defined as an upper side and the facing wall surface side is defined as a lower side, the facing wall surface is a curved surface that protrudes to the lower side.

It is preferable that the sensor unit of a spectroscopic analysis further comprises: a body portion containing a resin.

It is preferable that the inflow port and the outflow port have a circular shape or a rectangular shape.

It is preferable that a focusing position of the measurement light from the optical system is located between the emission surface and the facing wall surface.

It is preferable that the optical system includes a lens having a positive refractive power.

It is preferable that the optical system further includes an optical element of which an emission surface of the measurement light is a flat surface.

It is preferable that a thickness of the optical element in an optical axis direction is equal to or greater than a half of a distance between a point at which an emission surface of the lens intersects an optical axis and a focusing position of the measurement light and equal to or less than the distance.

It is preferable that a metal is disposed on at least a part of a surface of the side wall surface.

It is preferable that an interval between the emission surface and the facing wall surface is fixed.

It is preferable that the physical property data is Raman spectral data.

It is preferable that a turbidity of the fluid is equal to or greater than 250 NTU and equal to or less than 1000 NTU.

It is preferable that the fluid is a cell culture liquid.

The present disclosure provides a measurement system comprising: the sensor unit of a spectroscopic analysis apparatus according to any one of the above descriptions; and the container to which the distal end portion is attached.

It is preferable that, in a case in which the container is the flow cell and the distal end portion is attached to the flow cell, a flow channel through which the fluid flows is present on an inner side and an outer side of the distal end portion.

It is preferable that, in a case in which the container is the flow cell and the distal end portion is attached to the flow cell, a line connecting centers of the inflow port and the outflow port is parallel to the flow direction.

The present disclosure provides a measurement method comprising: measuring the physical property data by using the sensor unit of a spectroscopic analysis apparatus according to any one of the above descriptions.

According to the present disclosed technology, it is possible to provide the sensor unit of the spectroscopic analysis apparatus, the measurement system, and the measurement method that can reduce a risk of an adverse influence on the physical property data.

### BRIEF DESCRIPTION OF THE DRAWINGS

Fig. 1 is a diagram showing a state in which Raman spectral data of a measurement target substance in a cell culture liquid obtained from a culture tank during culture is measured by a measurement system.
Fig. 2 is a diagram showing excitation light and Raman scattered light.
Fig. 3 is an exploded perspective view of a flow cell.
Fig. 4 is an exploded perspective view of a sensor unit.
Fig. 5 is a cross-sectional view of the flow cell and the sensor unit.
Fig. 6 is a diagram showing a positional relationship between a flow channel of the flow cell and an inflow port and an outflow port of a distal end portion.
Fig. 7 is a diagram showing an example in which the distal end portion is attached to the flow cell having a relatively small flow channel diameter.
Fig. 8 is a diagram showing an example in which the distal end portion is attached to the flow cell having a medium flow channel diameter.
Fig. 9 is a diagram showing an example in which the distal end portion is attached to the flow cell having a relatively large flow channel diameter.
Fig. 10 is an explanatory diagram showing a focusing position of the excitation light and a thickness of an optical element in an optical axis direction.
Fig. 11 is a diagram showing a relationship between an area of a metal on a facing wall surface and an irradiation area of the excitation light on the facing wall surface.
Fig. 12 is a diagram showing the facing wall surface of a curved surface that protrudes to a lower side.
Fig. 13 is a diagram showing the inflow port and the outflow port that have a circular shape.
Fig. 14 is a diagram showing an information processing apparatus.
Fig. 15 is a block diagram of a computer constituting the information processing apparatus.
Fig. 16 is a block diagram showing a processing unit of a CPU of the information processing apparatus.
Fig. 17 is a diagram showing a composition of a data set group.
Fig. 18 is a diagram showing processing in a training phase of a concentration prediction model.
Fig. 19 is a diagram showing a state in which Raman spectral data measured by using the flow cell having the medium flow channel diameter is applied to the concentration prediction model and a concentration prediction result is output from the concentration prediction model.
Fig. 20 is a diagram showing a state in which the Raman spectral data measured by using the flow cell having the relatively large flow channel diameter is applied to the concentration prediction model and the concentration prediction result is output from the concentration prediction model.
Fig. 21 is a diagram showing a Raman spectral analysis screen.
Fig. 22 is a diagram showing the Raman spectral analysis screen on which the concentration prediction result is displayed.
Fig. 23 is a flowchart showing a processing procedure in the training phase of the concentration prediction model.
Fig. 24 is a flowchart showing a processing procedure of the information processing apparatus.

### DESCRIPTION OF THE PREFERRED EMBODIMENTS

### [First Embodiment]

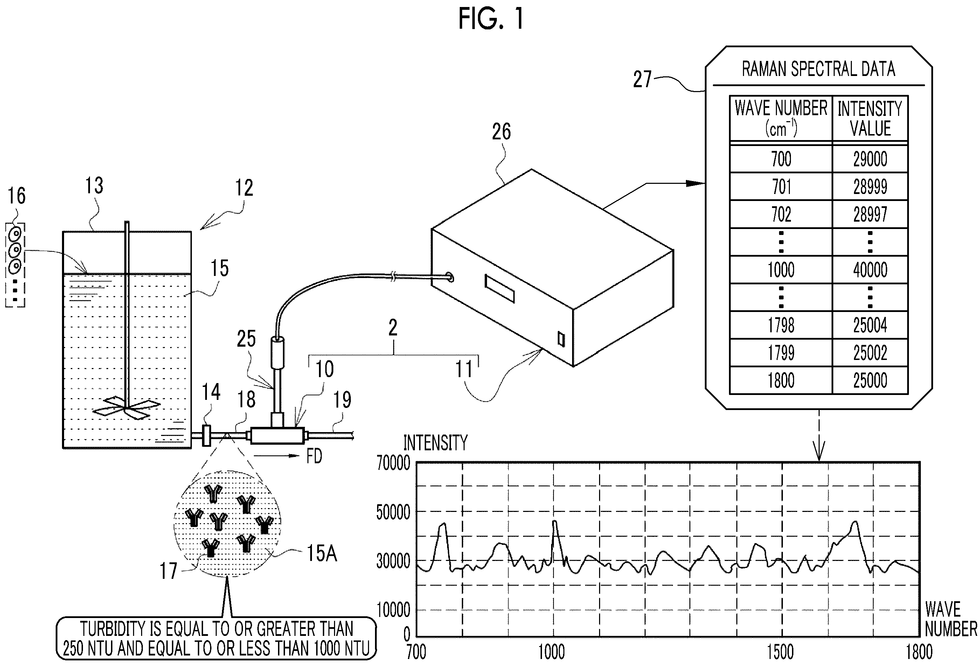

As shown in Fig. 1 as an example, a measurement system 2 comprises a flow cell 10 and a Raman spectrometer 11. The measurement system 2 is incorporated in, for example, a cell culture unit 12 of a system for manufacturing a drug substance of a biopharmaceutical. The cell culture unit 12 includes a culture tank 13 and a cell removal filter 14. A cell culture liquid 15 is stored in the culture tank 13. The flow cell 10 is an example of a "container" according to the present disclosed technology. In addition, the Raman spectrometer 11 is an example of a "spectroscopic analysis apparatus" according to the present disclosed technology. It should be noted that the cell removal filter 14 may be an alternating tangential flow filtration (ATF) filter.

An antibody-producing cell 16 is seeded in the culture tank 13, and the antibody-producing cell 16 is cultured in the cell culture liquid 15. The antibody-producing cell 16 is, for example, a cell established by incorporating an antibody gene into a host cell such as Chinese hamster ovary cells (CHO cells). The antibody-producing cell 16 produces immunoglobulin, that is, an antibody 17 in a process of culture. For this reason, the antibody 17 is present in the cell culture liquid 15 in addition to the antibody-producing cell 16. The antibody 17 is, for example, a monoclonal antibody, which serves as an active ingredient of the biopharmaceutical. It should be noted that the antibody 17 is an example of a "measurement target substance" according to the present disclosed technology.

A first sending-out channel 18 is connected to the culture tank 13. The cell removal filter 14 is disposed in the first sending-out channel 18. The cell removal filter 14 captures the antibody-producing cell 16 contained in the cell culture liquid 15 with a filter membrane (not shown) by using, for example, a tangential flow filtration (TFF) method, and removes the antibody-producing cell 16 from the cell culture liquid 15. Further, the cell removal filter 14 transmits the antibody 17. Therefore, the cell culture liquid 15 mainly containing the antibody 17 flows downstream of the cell removal filter 14 of the first sending-out channel 18. The cell culture liquid 15 from which the antibody-producing cell 16 has been removed by the cell removal filter 14 in this way is called a culture supernatant liquid. Hereinafter, the cell culture liquid 15 from which the antibody-producing cell 16 has been removed by the cell removal filter 14 will be referred to as a culture supernatant liquid 15A. The culture supernatant liquid 15A is an example of "fluid" according to the present disclosed technology.

A turbidity of the culture supernatant liquid 15A is equal to or greater than 250 nephelometric turbidity units (NTU) and equal to or less than 1000 NTU. NTU is a unit of a turbidity of liquid based on a formazin standard liquid. It should be noted that, in addition to the antibody 17, the culture supernatant liquid 15A also contains a cell-derived protein, a cell-derived deoxyribonucleic acid (DNA), an aggregate of the antibody 17, a virus, and the like. These cell-derived protein, the cell-derived DNA, the aggregate of the antibody 17, the virus, and the like are also examples of a "measurement target substance" according to the present disclosed technology.

The flow cell 10 is connected to the first sending-out channel 18 on the downstream side of the cell removal filter 14. In the flow cell 10, the culture supernatant liquid 15A from the first sending-out channel 18 flows at a preset flow rate as indicated by an arrow FD. A sending-out pump (not shown) is provided downstream of the cell removal filter 14 in the first sending-out channel 18 (between the cell removal filter 14 and the flow cell 10). The sending-out pump sends out the culture supernatant liquid 15A toward the flow cell 10 at a flow rate of equal to or greater than 200 cc/min, for example, 300 cc/min.

A second sending-out channel 19 is also connected to the flow cell 10. The culture supernatant liquid 15A that has flowed in the flow cell 10 from the first sending-out channel 18 flows out to the second sending-out channel 19. The second sending-out channel 19 is connected to, for example, a purification unit that purifies the antibody 17 from the culture supernatant liquid 15A by using a chromatography device, and sends out the culture supernatant liquid 15A from the flow cell 10 to the purification unit.

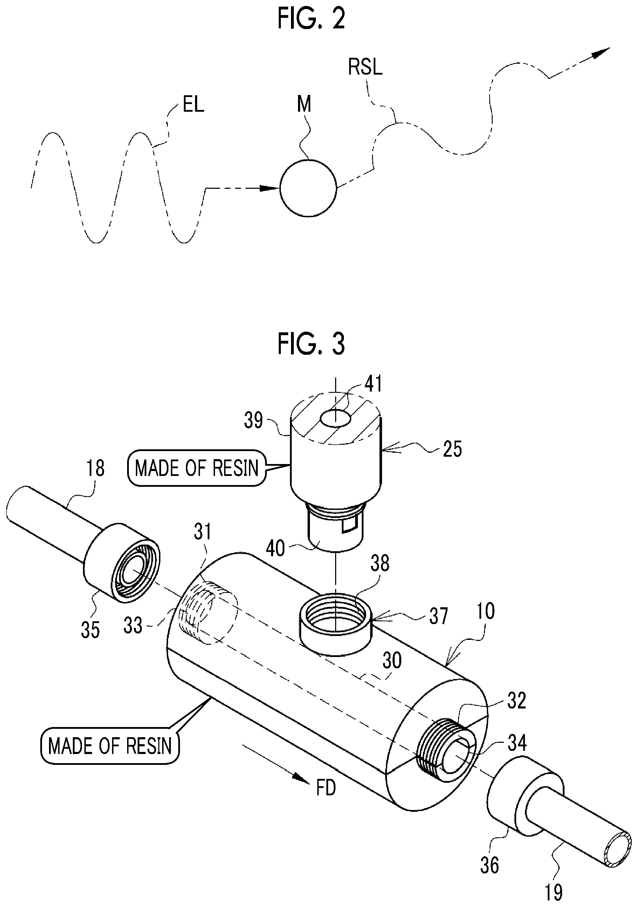

As shown in Fig. 2 as an example, the Raman spectrometer 11 is a device that evaluates a substance M by using the characteristics of Raman scattered light RSL. In a case in which the substance M is irradiated with excitation light EL, the excitation light EL interacts with the substance M to generate the Raman scattered light RSL having a wavelength different from the excitation light EL. A wavelength difference between the excitation light EL and the Raman scattered light RSL corresponds to the energy of the molecular vibration of the substance M. For this reason, it is possible to obtain the Raman scattered light RSL having different wave numbers between the substances M having different molecular structures. The excitation light EL is an example of "measurement light" according to the present disclosed technology. The Raman scattered light RSL is an example of "return light" according to the present disclosed technology. It should be noted that it is preferable that the Raman scattered light RSL is a Stokes ray out of the Stokes ray and an anti-Stokes ray.

Returning to Fig. 1, the Raman spectrometer 11 is configured by a sensor unit 25 and an analyzer 26. The sensor unit 25 is connected to the flow cell 10. The sensor unit 25 emits the excitation light EL from a distal end thereof. The culture supernatant liquid 15A that flows in the flow cell 10 is irradiated with the excitation light EL. The Raman scattered light RSL is generated by the interaction between the excitation light EL and the antibody 17 or the like in the culture supernatant liquid 15A. The sensor unit 25 receives the Raman scattered light RSL, and outputs the received Raman scattered light RSL to the analyzer 26.

The analyzer 26 generates Raman spectral data 27 by decomposing the Raman scattered light RSL for each wave number, and deriving an intensity value of the Raman scattered light RSL for each wave number. The Raman spectral data 27 is data in which the intensity value of the Raman scattered light RSL is registered for each wave number. In Fig. 1, the Raman spectral data 27 is data in which intensity values of the Raman scattered light RSL in a range of wave numbers of 700 cm⁻¹ to 1800 cm⁻¹ are derived in increments of 1 cm⁻¹. It should be noted that a graph shown below the Raman spectral data 27 is a graph in which the intensity value of the Raman spectral data 27 is plotted for each wave number and the plotted points are connected with a line. The Raman spectral data 27 is an example of "physical property data" according to the present disclosed technology.

In this way, the measurement system 2 allows the culture supernatant liquid 15A, which is obtained from the culture tank 13 in which the antibody-producing cell 16 is cultured, to flow into the flow cell 10. Then, the culture supernatant liquid 15A flowing into the flow cell 10 is irradiated with the excitation light EL via the sensor unit 25, so that the Raman spectral data 27 of the antibody 17 or the like contained in the culture supernatant liquid 15A is measured.

As shown in Fig. 3 as an example, the flow cell 10 is a cylindrical member including a linear flow channel 30 with a circular cross section at the center inside. The flow cell 10 contains a resin. A content of the resin in the flow cell 10 is equal to or greater than 95%, for example, 99%. Alternatively, the content of the resin is 100%, and the flow cell 10 is formed entirely of a resin. Stated another way, the flow cell 10 is made of a resin. The resin is, for example, a polyolefin-based resin. In this case, the flow cell 10 may be a single-use flow cell. It should be noted that the flow cell 10 may be made of a metal.

A first connection portion 31 and a second connection portion 32 having a cylindrical boss shape are provided at the centers of both end surfaces of the flow cell 10. The first connection portion 31 has an inflow port 33 of the flow channel 30, and the second connection portion 32 has an outflow port 34 of the flow channel 30. A direction parallel to the flow channel 30 from the inflow port 33 toward the outflow port 34 is a direction FD in which the culture supernatant liquid 15A flows. The direction FD is an example of a "flow direction" according to the present disclosed technology.

The first connection portion 31 and the second connection portion 32 are parallel screws or taper screws. A sterile connector 35 provided at one end of the first sending-out channel 18 is liquid-tightly attached to the first connection portion 31. Further, a sterile connector 36 provided at one end of the second sending-out channel 19 is liquid-tightly attached to the second connection portion 32. It should be noted that a ferrule may be used for the connection between the first connection portion 31 and the second connection portion 32 and the sterile connectors 35 and 36.

An attachment portion 37 is provided at the center of a peripheral plate of the flow cell 10. The attachment portion 37 is a cylindrical hole for attachably and detachably attaching the sensor unit 25 to the flow cell 10, and a screw 38 is cut into an inner wall surface thereof. The attachment portion 37 is provided up to the front of the flow channel 30. A part of the sensor unit 25 is contained in the attachment portion 37.

The sensor unit 25 comprises a body portion 39 and a distal end portion 40. The body portion 39 is a cylindrical member including a linear optical channel 41 with a circular cross section at the center inside. The excitation light EL and the Raman scattered light RSL pass through the optical channel 41. The excitation light EL passes through the optical channel 41 from the body portion 39 toward the distal end portion 40. On the contrary, the Raman scattered light RSL passes through the optical channel 41 from the distal end portion 40 to the body portion 39 and then to the analyzer 26. The body portion 39 contains a resin similarly to the flow cell 10. A content of the resin in the body portion 39 is equal to or greater than 95%, for example, 99%. Alternatively, the content of the resin is 100%, and the body portion 39 is formed entirely of the resin. Stated another way, the body portion 39 is made of a resin. The resin is, for example, a polyolefin-based resin similarly to the flow cell 10.

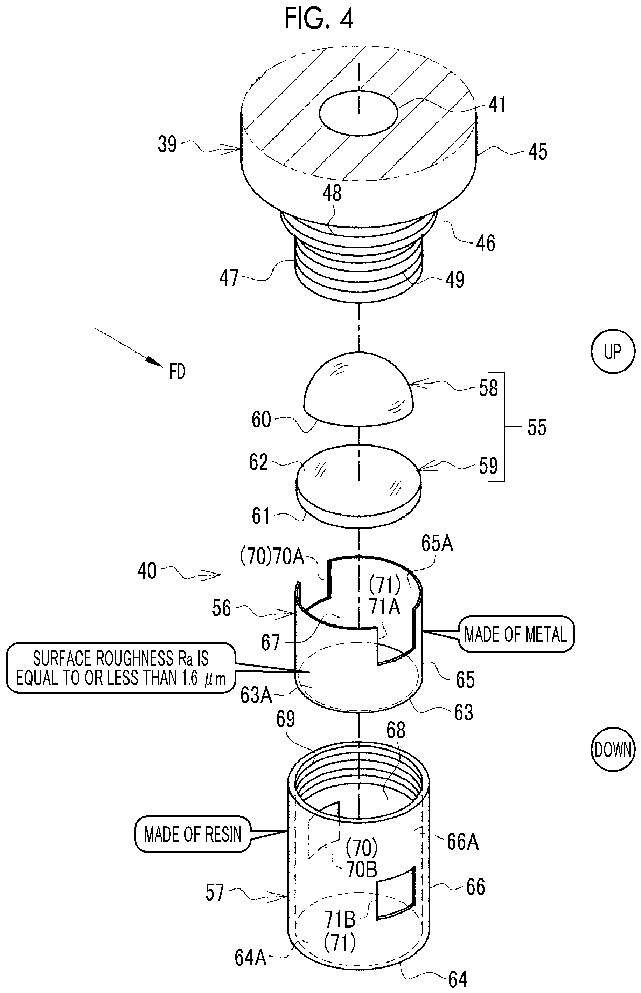

As shown in Fig. 4 as an example, the body portion 39 has a large diameter part 45, a medium diameter part 46, and a small diameter part 47 in order from a base end side. The large diameter part 45 is a part having the largest diameter in the body portion 39. The medium diameter part 46 is a part having a diameter smaller than the diameter of the large diameter part 45 and a diameter larger than the diameter of the small diameter part 47. A screw 48 is cut in the medium diameter part 46. The screw 48 is screwed to the screw 38 of the attachment portion 37. That is, the body portion 39 and thus the sensor unit 25 are attachably and detachably attached to the attachment portion 37 via the medium diameter part 46. Therefore, the medium diameter part 46, the distal end portion 40 which is a part of the sensor unit 25 from the medium diameter part 46, and the small diameter part 47 are contained in the flow cell 10. The small diameter part 47 is a part having the smallest diameter in the body portion 39. A screw 49 is cut in the small diameter part 47.

The distal end portion 40 includes an optical system 55, an inner shell portion 56, and an outer shell portion 57. The optical system 55 is held in the outer shell portion 57 between the small diameter part 47 of the body portion 39 and the inner shell portion 56. The optical system 55 includes a hemispherical lens 58 and a transparent plate 59. The hemispherical lens 58 is literally a lens having a hemispherical shape, and is made of, for example, quartz glass. The hemispherical lens 58 includes an emission surface 60 of the excitation light EL. The emission surface 60 is a flat surface. The hemispherical lens 58 is an example of "a lens having a positive refractive power" according to the present disclosed technology.

The transparent plate 59 is a disk having an emission surface 61 and an incidence surface 62 of the excitation light EL that are parallel to each other, and is made of, for example, quartz glass. Curvatures of the emission surface 60 of the hemispherical lens 58 and the incidence surface 62 of the transparent plate 59 are the same (in this case, 0). The emission surface 60 and the incidence surface 62 may be fixedly joined using an adhesive or the like, or may be held in a state in which the surfaces are simply combined with each other without using an adhesive or the like. The transparent plate 59 is an example of an "optical element" according to the present disclosed technology. In addition, the emission surface 61 of the transparent plate 59 is an example of an "emission surface of the measurement light of the optical system" according to the present disclosed technology.

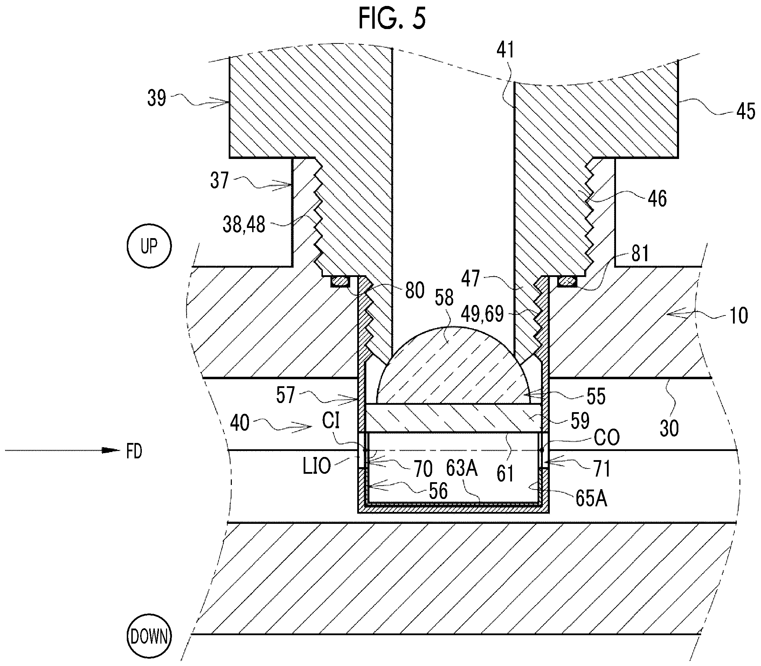

In a case in which the body portion 39 side (emission surface 61 side of the transparent plate 59) is defined as an upper side and the distal end portion 40 side (inner wall surface 63A side of the bottom plate 63 of the inner shell portion 56) is defined as a lower side (see also Fig. 5), both the inner shell portion 56 and the outer shell portion 57 have a cylindrical container shape in which the upper side is open and the lower side is closed by the bottom plates 63 and 64 having a planar shape. The inner shell portion 56 has a peripheral plate 65, and the outer shell portion 57 has a peripheral plate 66. The peripheral plate 65 is provided to stand on the bottom plate 63, and forms a columnar space 67 with the bottom plate 63. Similarly, the peripheral plate 66 is provided to stand on the upper side from the bottom plate 64, and forms a columnar space 68 with the bottom plate 64.

A height of the peripheral plate 65 is lower than a height of the peripheral plate 66. That is, a height of the inner shell portion 56 is lower than a height of the outer shell portion 57. The inner shell portion 56 has a smaller size than the outer shell portion 57 by one size in total, and is contained in the space 68 of the outer shell portion 57 without a gap (see also Fig. 5).

The inner shell portion 56 is made of a metal, for example, a Hastelloy. On the other hand, the outer shell portion 57 contains a resin, similarly to the flow cell 10 or the like. A content of the resin in the outer shell portion 57 is equal to or greater than 95%, for example, 99%. Alternatively, the content of the resin is 100%, and the outer shell portion 57 is formed entirely of the resin. Stated another way, the outer shell portion 57 is made of a resin. The resin is, for example, a polyolefin-based resin, similarly to the flow cell 10 or the like.

A screw 69 is cut on an upper side of an inner wall surface 66A of the peripheral plate 66 of the outer shell portion 57. The screw 69 is screwed with the screw 49 of the small diameter part 47. Accordingly, the outer shell portion 57 and thus the distal end portion 40 are integrated with the body portion 39.

Rectangular cutouts 70A and 71A are formed at positions that are 180° symmetrical to each other on the upper side of the peripheral plate 65. In addition, rectangular holes 70B and 71B are formed at positions that are 180° symmetrical to each other on the center portion of the peripheral plate 66. The holes 70B and 71B are more accurately square. The cutouts 70A and 71A have the same size as the holes 70B and 71B. The cutout 70A corresponds to the hole 70B, and the cutout 71A corresponds to the hole 71B. The cutout 70A and the hole 70B function as an inflow port 70 for the culture supernatant liquid 17. In addition, the cutout 71A and the hole 71B function as an outflow port 71 for the culture supernatant liquid 17.

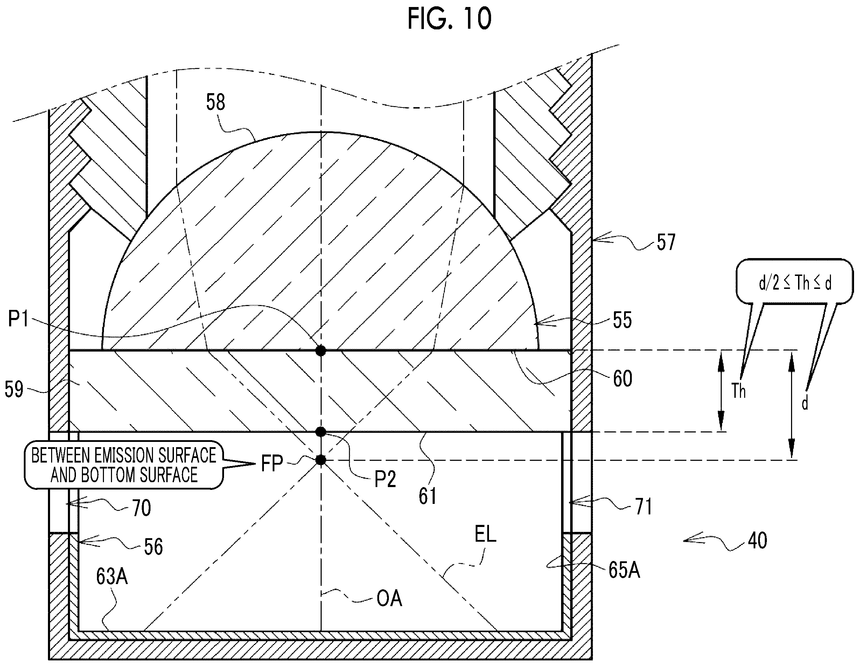

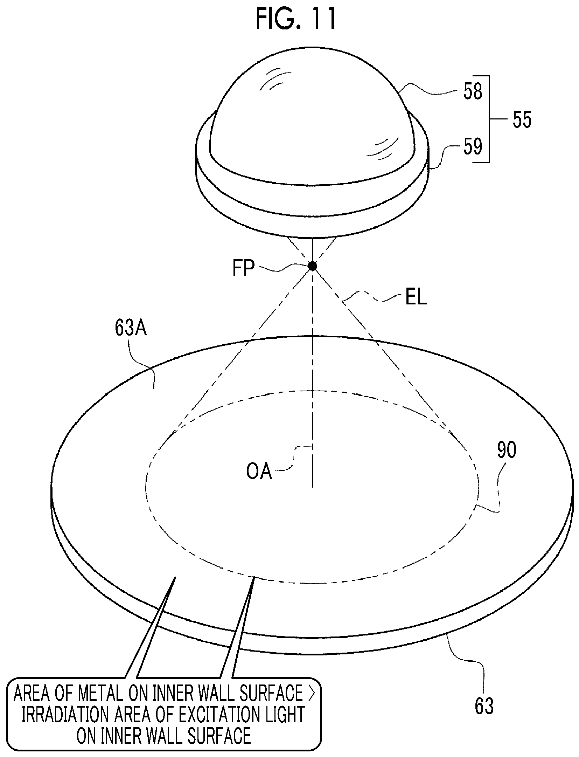

The inner wall surface 63A of the bottom plate 63 of the inner shell portion 56 has a planar shape. The inner wall surface 63A is located on a side toward the excitation light EL is directed (downstream side in an irradiation direction of the excitation light EL), and the excitation light EL is emitted to the inner wall surface 63A (see Figs. 10 and 11). The inner wall surface 63A faces the emission surface 61 of the transparent plate 59. That is, the inner wall surface 63A is an example of a "facing wall surface" according to the present disclosed technology. In a case in which the optical system 55 and the inner shell portion 56 are contained in the space 68 of the outer shell portion 57, and the screw 69 of the outer shell portion 57 is screwed to the screw 49 of the small diameter part 47 to integrate the distal end portion 40 with the body portion 39, an interval between the emission surface 61 and the inner wall surface 63A is fixed.

A surface roughness (arithmetic average roughness) Ra of the inner wall surface 63A is greater than 0 and equal to or less than 6.4 µm (0 < Ra ≤ 6.4 µm), and preferably equal to or less than 1.6 µm (0 < Ra ≤ 1.6 µm). Although not shown, a surface roughness Ra of an inner wall surface 65A is also greater than 0 and equal to or less than 6.4 µm, preferably equal to or less than 1.6 µm. The inner wall surfaces 63A and 65A are subjected to a smoothing treatment, such as polishing, in order to set the surface roughness Ra to a target value. It should be noted that the surface roughness Ra is a value measured in accordance with JIS B 0601-2001 specified in Japanese Industrial Standards.

In a case in which the inner shell portion 56 is viewed from above, the inner wall surface 65A of the peripheral plate 65 protrudes from the emission surface 61 side of the transparent plate 59 to the inner wall surface 63A side. In addition, the inner wall surface 65A holds the inner wall surface 63A in a state in which the space 67 for the culture supernatant liquid 17 to flow is provided between the inner wall surface 65A and the emission surface 61. Further, the inner wall surfaces 65A are disposed on both sides in the direction FD, and closes both sides in the direction FD. That is, the inner wall surface 65A is an example of a "side wall surface" according to the present disclosed technology, and the inner shell portion 56 is an example of a "holding portion" according to the present disclosed technology. As can be seen from the inner shell portion 56, the functions of the "facing wall surface" and the "holding portion" according to the present disclosed technology may be implemented by one member. It should be noted that reference numeral 64A indicates an inner wall surface of the bottom plate 64 of the outer shell portion 57.

As shown in Fig. 5 as an example, the optical system 55 is held to be interposed between the distal end of the small diameter part 47 of the body portion 39 and an edge of the peripheral plate 65 of the inner shell portion 56. The emission surface 61 of the transparent plate 59 and upper end edges of the inflow port 70 and the outflow port 71 have the same height. A circular groove 80 is formed in a portion of the attachment portion 37 that is in contact with the medium diameter part 46 of the body portion 39. An O-ring 81 is fitted into the groove 80. The O-ring 81 is made of elastic rubber and is crushed between the medium diameter part 46 and the bottom plate of the groove 80 by fastening and fixing the body portion 39 to the attachment portion 37 via the screws 38 and 48. The O-ring 81 is crushed between the medium diameter part 46 and the bottom plate of the groove 80 to prevent the culture supernatant liquid 15A flowing through the flow channel 30 from leaking out of the attachment portion 37. It should be noted that, although not shown, O-rings for preventing the culture supernatant liquid 15A from leaking out are also disposed between the small diameter part 47 and the hemispherical lens 58 and between the inner shell portion 56 and the transparent plate 59.

In a case in which the distal end portion 40 is attached to the flow cell 10 as shown in Fig. 5, a line LIO connecting a center CI of the inflow port 70 and a center CO of the outflow port 71 is parallel to the direction FD. Stated another way, the line LIO is parallel to the center line of the flow channel 30. Here, the term "parallel" refers to parallel in a meaning including an error that is generally allowed in the technical field to which the present disclosed technology belongs and that does not contradict the gist of the present disclosed technology, in addition to completely parallel.

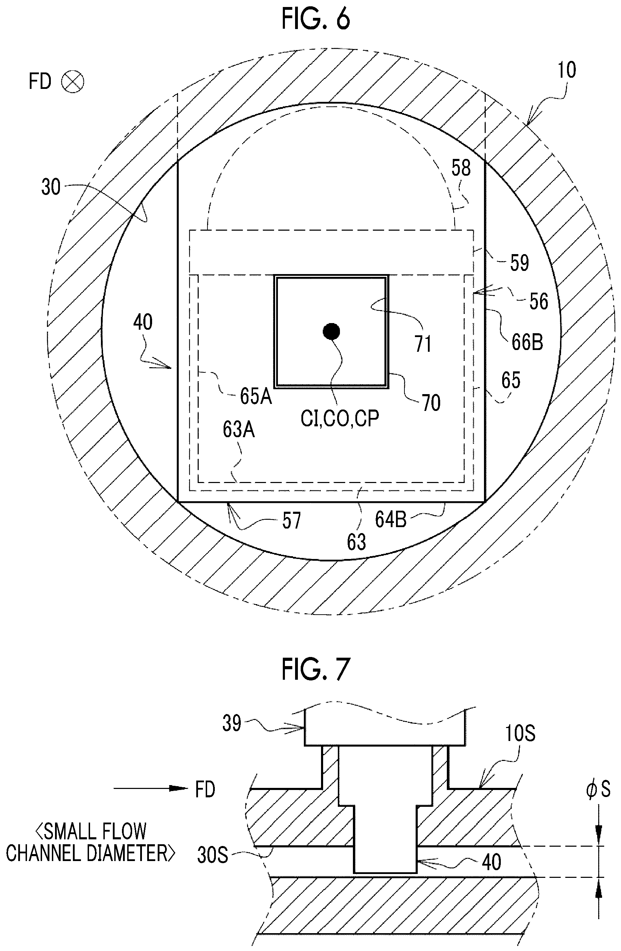

In addition, as shown in Fig. 6 as an example, in a case in which the distal end portion 40 is attached to the flow cell 10, the center CI of the inflow port 70, the center CO of the outflow port 71, and a center CP of the flow channel 30 match each other. Here, the term "match" refers to match in a meaning including an error that is generally allowed in the technical field to which the present disclosed technology belongs and that does not contradict the gist of the present disclosed technology, in addition to a case of a complete match. The error referred to herein is preferably ±10% and more preferably ±5%.

As can be seen from Fig. 6, in a case in which the distal end portion 40 is attached to the flow cell 10, the flow channel for the culture supernatant liquid 15A to flow is present on the inner side and the outer side of the distal end portion 40. Stated another way, the culture supernatant liquid 15A flows through the inner side and the outer side of the distal end portion 40. The flow channel on the inner side of the distal end portion 40 is defined by the inflow port 70, the outflow port 71, the emission surface 61 of the transparent plate 59, the inner wall surface 63A of the bottom plate 63 of the inner shell portion 56, and the inner wall surface 65A of the peripheral plate 65 of the inner shell portion 56. The flow channel on the outer side of the distal end portion 40 is defined by the flow channel 30 of the flow cell 10, the outer wall surface 64B of the bottom plate 64 of the outer shell portion 57, and an outer wall surface 66B of the peripheral plate 66 of the outer shell portion 57. It should be noted that an area of the inflow port 70 and the outflow port 71 is preferably equal to or less than 1/2 of an area of the peripheral plate 65 of the inner shell portion 56, more preferably equal to or less than 1/4, and still more preferably equal to or less than 1/8.

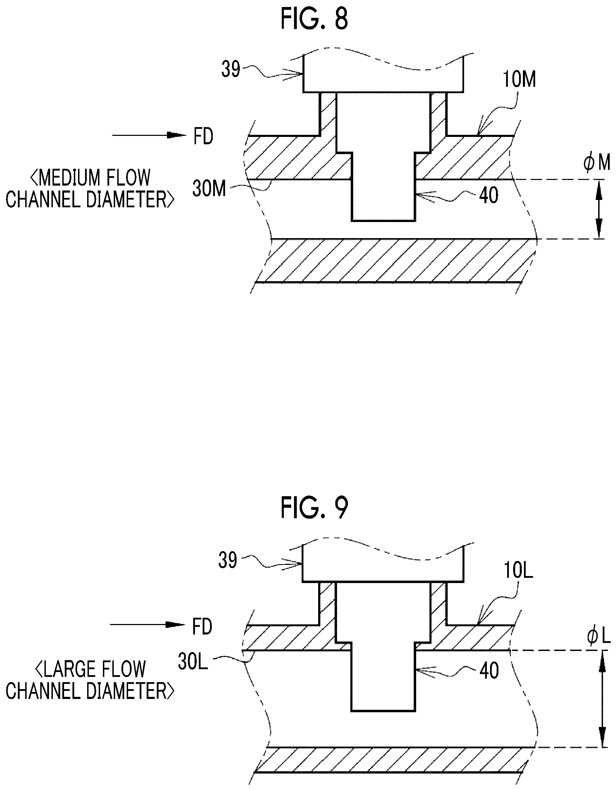

As shown in Figs. 7 to 9 as an example, the distal end portion 40 is attached to the plurality of types of flow cells 10 having different flow channel diameters. Specifically, first, as shown in Fig. 7, the distal end portion 40 is attached to a flow cell 10S including a flow channel 30S having a flow channel diameter φS. In addition, as shown in Fig. 8, the distal end portion 40 is attached to a flow cell 10M including a flow channel 30M having a flow channel diameter φM. Further, as shown in Fig. 9, the distal end portion 40 is attached to a flow cell 10L including a flow channel 30L having a flow channel diameter φL. The flow channel diameters φS, φM, and φL have a relationship of φS < φM < φL. That is, the flow cell 10S has a relatively small flow channel diameter φ, the flow cell 10M has a medium flow channel diameter φ, and the flow cell 10L has a relatively large flow channel diameter φ. It should be noted that the flow rate of the culture supernatant liquid 15A is always the same regardless of the type of the flow cell 10.

Here, even in a case in which the distal end portion 40 is attached to any one of the flow cell 10S, 10M, or 10L, the line LIO connecting the center CI of the inflow port 70 and the center CO of the outflow port 71 is parallel to the direction FD. In addition, even in a case in which the distal end portion 40 is attached to any one of the flow cell 10S, 10M, or 10L, the center CI of the inflow port 70, the center CO of the outflow port 71, and the center CP of the flow channel 30 match each other. It should be noted that, although three types of the flow cells 10S, 10M, and 10L are described here, the number of types of the flow cells 10 to which the distal end portion 40 is attached may be two or four or more.

As shown in Fig. 10 as an example, the excitation light EL emitted from the emission surface 61 of the transparent plate 59 is focused at the focusing position FP located in the inner shell portion 56. A focal length is determined by a diameter and a refractive index of the hemispherical lens 58, and the focusing position FP is determined by the focal length. In this case, the focusing position FP has a dot shape. The focusing position FP is located between the emission surface 61 of the transparent plate 59 and the inner wall surface 63A of the bottom plate 63 of the inner shell portion 56.

In a case in which a thickness of the transparent plate 59 in an optical axis OA direction is denoted by Th, and a distance between the first point P1 at which the emission surface 60 of the hemispherical lens 58 intersects the optical axis OA and the focusing position FP is denoted by d, the thickness Th is equal to or greater than a half of the distance d and equal to or less than the distance d (d/2 ≤ Th ≤ d). More preferably, the thickness Th is the same as the distance d, that is, Th = d. In a case in which Th = d, the focusing position FP matches a second point P2 at which on the emission surface 61 of the transparent plate 59 intersects the optical axis OA. It should be noted that the term "equal" between the thickness Th and the distance d refers to "equal" in a meaning including an error that is generally allowed in the technical field to which the present disclosed technology belongs and an error to such an extent not contrary to the spirit and scope of the present disclosed technology, in addition to completely equal. The error referred to herein is preferably ±10% and more preferably ±5%.

As shown in Fig. 11 as an example, the excitation light EL that has passed through the focusing position FP spreads in a conical shape from the focusing position FP toward the inner wall surface 63A and is finally emitted to the inner wall surface 63A. Reference numeral 90 indicates an irradiation region of the excitation light EL on the inner wall surface 63A. An irradiation region 90 is a circle centered on the optical axis OA. A diameter of the irradiation region 90 is smaller than the diameter of the inner wall surface 63A. Stated another way, an area of the metal on the inner wall surface 63A is larger than an irradiation area of the excitation light EL on the inner wall surface 63A (area of metal on inner wall surface 63A > irradiation area of excitation light EL on inner wall surface 63A).

Next, the effects obtained from the above-described configuration will be described. The measurement system 2 consisting of the flow cell 10 and the Raman spectrometer 11 is incorporated in the cell culture unit 12. In the flow cell 10, the first connection portion 31 is connected to the first sending-out channel 18, and the second connection portion 32 is connected to the second sending-out channel 19. The sensor unit 25 (distal end portion 40) of the Raman spectrometer 11 is attached to the flow cell 10 via the attachment portion 37. The culture supernatant liquid 15A obtained from the culture tank 13 in which the antibody-producing cell 16 is cultured is flowed into the flow channel 30 of the flow cell 10. The culture supernatant liquid 15A flows into the distal end portion 40 of the sensor unit 25 from the inflow port 70 and flows out of the distal end portion 40 from the outflow port 71. In the distal end portion 40, the culture supernatant liquid 15A is irradiated with the excitation light EL that has passed through the optical channel 41 and the optical system 55. The excitation light EL is focused at the focusing position FP by the optical system 55.

The Raman scattered light RSL is generated by the interaction between the excitation light EL and the antibody 17 or the like in the culture supernatant liquid 15A. The Raman scattered light RSL is taken in by the optical system 55, passes through the optical channel 41, and is output from the sensor unit 25 to the analyzer 26. The Raman scattered light RSL is converted into the Raman spectral data 27 by the analyzer 26.

The distal end portion 40 has the inner wall surface 63A and the inner shell portion 56. The inner wall surface 63 A is a wall surface that faces the emission surface 61 of the transparent plate 59. The inner shell portion 56 protrudes from the emission surface 61 side to the inner wall surface 63A side and holds the inner wall surface 63 A in a state in which the space 67 for the culture supernatant liquid 15A to flow is provided between the inner wall surface 63A and the emission surface 61. The inner shell portion 56 includes the inflow port 70 and the outflow port 71 for the culture supernatant liquid 15A, and the inner wall surfaces 65A disposed on both sides in the direction FD. With the inner wall surface 65A, it is possible to reduce the risk in which the Raman spectral data 27 may be adversely affected, as compared with the sensor unit described in JP2021-048872A in which one side in the flow direction of the fluid is open. For example, so that it is possible to reduce the risk in which the excitation light EL is emitted to the flow cell 10 made of a resin, the Raman scattered light RSL generated by the interaction between the excitation light EL and the resin of the flow cell 10 is taken in, and the Raman spectral data 27 is adversely affected. It should be noted that, even in a case in which the flow cell 10 is not made of a resin, it is possible to reduce the risk in which the Raman spectral data 27 is adversely affected due to the Raman scattered light from the flow cell 10 caused by the leakage light of the excitation light EL.

The intensity of the Raman scattered light RSL generated by the interaction between the excitation light EL and the resin of the flow cell 10 is relatively high. Therefore, in a case of the sensor unit described in JP2021-048872A, the Raman scattered light RSL, which is generated by the interaction between the excitation light EL and the antibody 17 or the like in the culture supernatant liquid 15A and is to be originally measured, is canceled out due to the Raman scattered light RSL generated by the interaction between the excitation light EL and the resin of the flow cell 10. That is, an S/N ratio of the Raman spectral data 27 caused by the Raman scattered light RSL that is generated by the interaction between the excitation light EL and the antibody 17 or the like contained in the culture supernatant liquid 15A is significantly reduced.

However, in the present disclosed technology, since the inner wall surfaces 65A disposed on both sides in the direction FD are provided, there is a low risk in which the Raman scattered light RSL, which is generated by the interaction between the excitation light EL and the antibody 17 or the like in the culture supernatant liquid 15A and is to be measured originally, is canceled out due to the Raman scattered light RSL generated by the interaction between the excitation light EL and the resin of the flow cell 10. That is, the S/N ratio of the Raman spectral data 27 caused by the Raman scattered light RSL that is generated by the interaction between the excitation light EL and the antibody 17 or the like contained in the culture supernatant liquid 15A can be maintained at a higher level.

In addition, since the inner wall surfaces 65A disposed on both sides in the direction FD are provided, the flow of the culture supernatant liquid 15A in the vicinity of the focusing position FP of the excitation light EL in the inner shell portion 56 can be stabilized as compared with the sensor unit described in JP2021-048872A. Therefore, the bias of the component in the culture supernatant liquid 15 A in the vicinity of the focusing position FP is reduced, and the measurement stability of the Raman spectral data 27 can be improved.

In a case in which a branch flow channel having a flow channel diameter set in advance in the first sending-out channel 18 is provided and the flow cell 10 is connected to the branch flow channel, the Raman spectral data 27 can be measured with the flow cell 10 having the same diameter regardless of the flow channel diameter of the first sending-out channel 18, but, in this case, the branch flow channel should be provided, which is time-consuming. In contrast, according to the present disclosed technology, such time and effort are not required.

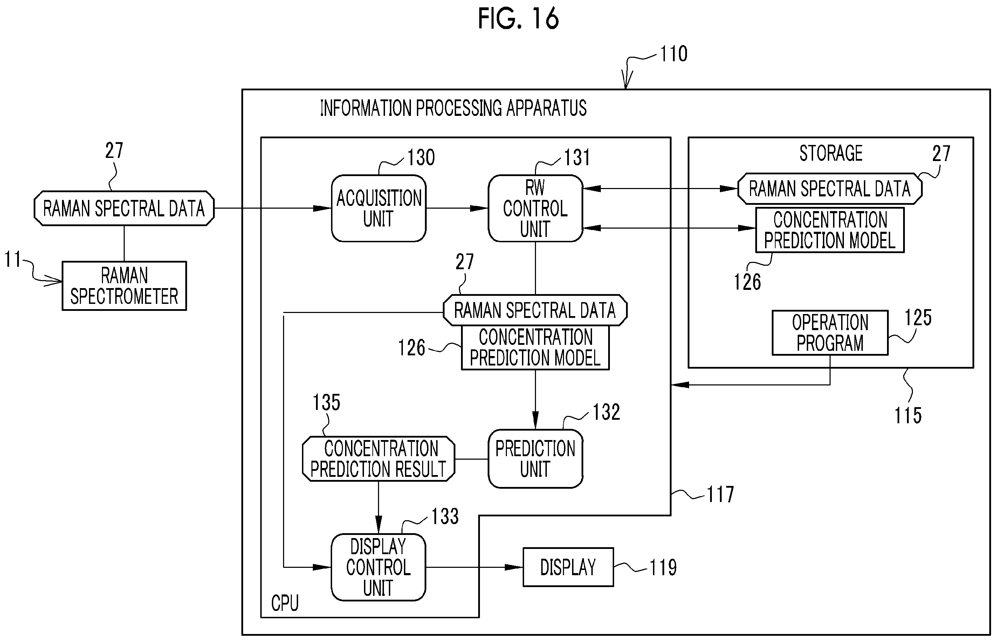

In addition, although described in detail in a second embodiment later, with the sensor unit 25, a concentration prediction model 126 (see Fig. 16) that predicts a concentration of the antibody 17 contained in the culture supernatant liquid 15A based on the Raman spectral data 27 can be generated only from the Raman spectral data 27 measured using one type of the flow cell 10, and the generated concentration prediction model 126 can be shared by the plurality of types of flow cells 10. It is possible to save the time and effort of preparing the concentration prediction model 126 for each of the plurality of types of flow cells 10.

As shown in Fig. 1 and the like, the container to which the distal end portion 40 is attached is the flow cell 10 including the flow channel 30 through which the culture supernatant liquid 15A flows. Therefore, the Raman spectral data 27 of the culture supernatant liquid 15A can be easily measured without making a modification such as providing the attachment portion of the distal end portion 40 in the culture tank 13.

As shown in Fig. 3, the distal end portion 40 is attached to the flow cell 10 containing a resin. Therefore, it is possible to greatly exhibit an effect of reducing the risk in which the excitation light EL is emitted to the resin of the flow cell 10, the Raman scattered light RSL is taken in, and the Raman spectral data 27 is adversely affected.

As shown in Figs. 7 to 9, the distal end portion 40 is attached to the plurality of types of flow cells 10S, 10M, and 10L having different flow channel diameters. As described above, the distal end portion 40 has the inner wall surface 63A facing the emission surface 61 of the transparent plate 59, and the interval between the emission surface 61 of the transparent plate 59 and the inner wall surface 63Ais not changed. Therefore, even in a case in which the same measurement target substance is measured, the Raman spectral data 27 does not differ in the plurality of types of flow cells 10S, 10M, and 10L having different flow channel diameters, and the flow cell 10 having various flow channel diameters can be used without any problem.

As shown in Fig. 4, the inner shell portion 56 is made of a metal, and the inner wall surfaces 63A and 65A are formed of a metal. Therefore, it is possible to further reduce the risk in which the excitation light EL is emitted to the resin, the Raman scattered light RSL generated by the interaction between the excitation light EL and the resin is taken in, and the Raman spectral data 27 is adversely affected.

As shown in Fig. 11, the area of the metal on the inner wall surface 63A is larger than the irradiation area of the excitation light EL on the inner wall surface 63A. Therefore, it is possible to more reliably reduce the risk in which the excitation light EL is emitted to the resin, the Raman scattered light RSL generated by the interaction between the excitation light EL and the resin is taken in, and the Raman spectral data 27 is adversely affected.

As shown in Fig. 4, the surface roughness Ra of the inner wall surface 63A is equal to or less than 1.6 µm. Therefore, the excitation light EL and the Raman scattered light RSL are reflected by the inner wall surface 63A, so that the intensity value of the Raman spectral data 27 can be increased.

As shown in Fig. 4 and the like, the inner wall surface 63Ais the flat surface. Therefore, it is easily manufacture the inner wall surface 63A and thus the inner shell portion 56.

As shown in Fig. 3, the body portion 39 contains the resin. Therefore, the body portion 39 can be manufactured at a low cost and can be easily discarded.

As shown in Fig. 4 and the like, the inflow port 70 and the outflow port 71 have the rectangular shape. Therefore, the culture supernatant liquid 15A can flow toward the focusing position FP of the excitation light EL in the inner shell portion 56 without stress. The bias of the component in the culture supernatant liquid 15A in the vicinity of the focusing position FP is reduced, and the measurement stability of the Raman spectral data 27 can be improved.

As shown in Fig. 10, the focusing position FP of the excitation light EL from the optical system 55 is located between the emission surface 61 and the inner wall surface 63A of the transparent plate 59. Therefore, it is possible to reliably measure the Raman spectral data 27 of the culture supernatant liquid 15A flowing in the inner shell portion 56.

As shown in Fig. 4 and the like, the optical system 55 includes the hemispherical lens 58 having a positive refractive power. Therefore, the focusing position FP of the excitation light EL can be set to a position relatively close to the emission surface 61 of the transparent plate 59, and the risk in which the excitation light EL is attenuated in the culture supernatant liquid 15A can be reduced.

As shown in Fig. 4 and the like, the optical system 55 further includes the transparent plate 59 of which the emission surface 61 of the excitation light EL is a flat surface. Therefore, it is possible to further reduce the risk in which the excitation light EL is attenuated in the culture supernatant liquid 15A.

As shown in Fig. 10, the thickness Th of the transparent plate 59 in the optical axis OA direction is equal to or greater than the half of the distance d between the first point P1 at which the emission surface 60 of the hemispherical lens 58 intersects the optical axis OA and the focusing position FP of the excitation light EL and equal to or less than the distance d. In a case in which the thickness Th is equal to or greater than the half of the distance d, the effect of reducing the risk in which the excitation light EL is attenuated in the culture supernatant liquid 15A can be further exhibited. In a case in which the thickness Th is equal to or less than the distance d, the focusing position FP can be always set to the outside of the transparent plate 59.

The interval between the emission surface 61 and the inner wall surface 63A of the transparent plate 59 is fixed. For this reason, even in a case in which the same measurement target substance is measured, the Raman spectral data 27 does not differ in the plurality of types of flow cells 10S, 10M, and 10L having different flow channel diameters, and the flow cell 10 having various flow channel diameters can be used without any problem.

The Raman scattered light RSL is likely to reflect information derived from a functional group of an amino acid of a protein. Therefore, by using the physical property data as the Raman spectral data 27 as in the present example, it is possible to acquire the physical property data that clearly reflects the physical property such as the concentration of the antibody 17 which is a protein.

As shown in Fig. 1, the turbidity of the culture supernatant liquid 15A is equal to or greater than 250 NTU and equal to or less than 1000 NTU. In this case, the attenuation of the excitation light EL due to the culture supernatant liquid 15A becomes greater. Therefore, it is possible to greatly exhibit the effect of reducing the risk in which the excitation light EL is attenuated in the culture supernatant liquid 15A by using the hemispherical lens 58 having a positive refractive power or by using the transparent plate 59 of which the emission surface 61 of the excitation light EL is a flat surface.

The biopharmaceutical including the antibody 17, which is the cell product, is called an antibody drug and is widely used not only for the treatment of chronic diseases, such as cancer, diabetes, and rheumatoid arthritis, but also for the treatment of rare diseases, such as hemophilia and a Crohn's disease. For this reason, according to this example in which the culture supernatant liquid 15A, which is obtained from the culture tank 13 in which the antibody-producing cell 16 is cultured and serves as a source of the antibody drug, is used as the fluid, it is possible to promote the development of the antibody drug that is widely used for the treatment of various diseases.

The culture supernatant liquid 15A obtained from the culture tank 13 during culture is used as fluid. Therefore, it is possible to measure the Raman spectral data 27 while continuing to culture the antibody-producing cell 16 in the culture tank 13. Further, the culture supernatant liquid 15A is obtained by removing the antibody-producing cell 16. Therefore, the Raman spectral data 27 of the antibody 17 or the like, which is the cell product, can be accurately measured.

As shown in Fig. 6 and the like, in a case in which the distal end portion 40 is attached to the flow cell 10, the flow channel for the culture supernatant liquid 15 A to flow is present on the inner side and the outer side of the distal end portion 40. Therefore, the Raman spectral data 27 of the culture supernatant liquid 15A can be measured in the distal end portion 40 (inner shell portion 56). In addition, the flow of the culture supernatant liquid 15A in the flow cell 10 is not hindered by the distal end portion 40.

As shown in Fig. 5, in a case in which the distal end portion 40 is attached to the flow cell 10, the line LIO connecting the centers CI and CO of the inflow port 70 and the outflow port 71 is parallel to the direction FD. Therefore, the culture supernatant liquid 15A can flow toward the focusing position FP of the excitation light EL in the inner shell portion 56 without stress. The bias of the component in the culture supernatant liquid 15A in the inner shell portion 56 is reduced, and the measurement stability of the Raman spectral data 27 can be improved.

### (First Modification Example)

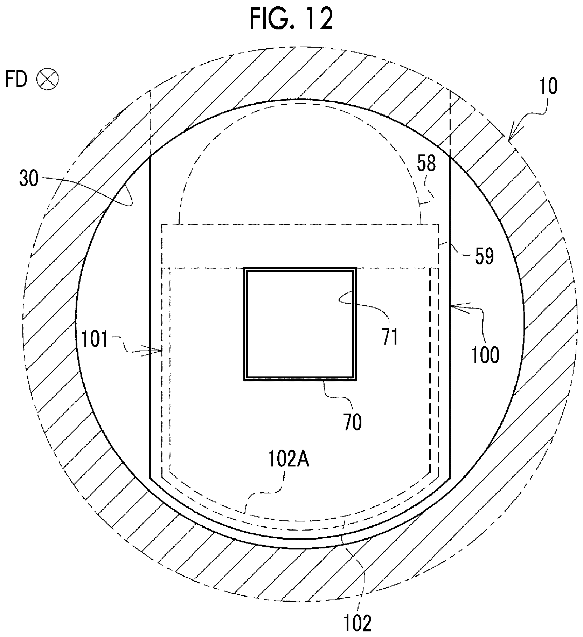

A distal end portion 100 shown in Fig. 12 as an example may be used. The distal end portion 100 has an inner shell portion 101. A bottom plate 102 of the inner shell portion 101 and an inner wall surface 102A of the bottom plate 102 are curved surfaces that protrude to the lower side in accordance with the shape of the flow channel 30 of the flow cell 10. The inner wall surface 102A is an example of a "facing wall surface" according to the present disclosed technology.

In this way, in a case in which the inner wall surface 102A is a curved surface that protrudes to the lower side, the inner wall surface 102A serves as a reflecting surface that directs the Raman scattered light RSL to the optical system 55. Therefore, it is possible to further increase the S/N ratio of the Raman spectral data 27. It should be noted that the curved surface that protrudes to the lower side may have a parabolic antenna shape.

### (Second Modification Example)

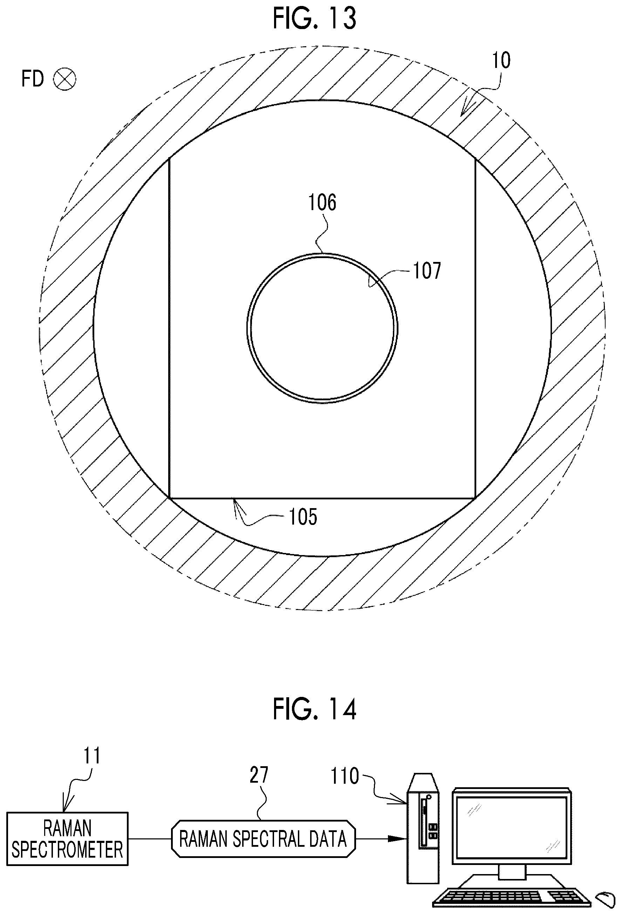

A distal end portion 105 shown in Fig. 13 as an example may be used. The distal end portion 105 has an inflow port 106 and an outflow port 107 that have a circular shape. In this way, the shapes of the inflow port and the outflow port are not limited to a rectangular shape such as the inflow port 70 and the outflow port 71, and may be a circular shape such as the inflow port 106 and the outflow port 107.

It should be noted that the inner shell portion 56 is not limited to the cylindrical container shape shown in the example. A square tubular container shape, a hexagonal tubular container shape, or the like may be used. Therefore, the bottom plate 63 is not limited to the circular shape shown in the example, and may have a rectangular shape, a hexagonal shape, or the like. In addition, the peripheral plate 66 is not limited to the curved surface shown in the example, and may be a flat surface.

### [Second Embodiment]

In the second embodiment, the state of the measurement target substance such as the antibody 17 contained in the culture supernatant liquid 15A is predicted based on the Raman spectral data 27.

As shown in Fig. 14 as an example, the Raman spectrometer 11 is connected to an information processing apparatus 110 via a computer network such as a local area network (LAN) in a mutually communicable manner. The Raman spectrometer 11 transmits the Raman spectral data 27 to the information processing apparatus 110. The information processing apparatus 110 is, for example, a desktop personal computer, a laptop personal computer, or a tablet terminal.

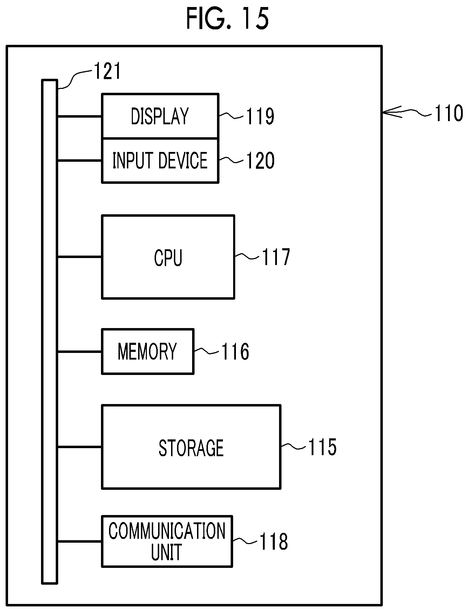

As an example, as shown in Fig. 15, a computer constituting the information processing apparatus 110 comprises a storage 115, a memory 116, a central processing unit (CPU) 117, a communication unit 118, a display 119, and an input device 120. These units are connected to each other via a busline 121.

The storage 115 is a hard disk drive that is built in the computer constituting the information processing apparatus 110 or connected to the computer through a cable or a network. Alternatively, the storage 115 is a disk array in which a plurality of hard disk drives are mounted. The storage 115 stores a control program such as an operating system, various application programs, various types of data associated with these programs, and the like. It should be noted that a solid-state drive may be used instead of the hard disk drive.

The memory 116 is a work memory for the CPU 117 to execute processing. The CPU 117 loads the program stored in the storage 115 into the memory 116, and executes processing in accordance with the program. As a result, the CPU 117 integrally controls the respective units of the computer. It should be noted that the memory 116 may be built in the CPU 117.

The communication unit 118 is a network interface that executes transmission control of various types of information via a LAN or the like. The display 119 displays various screens. The various screens have an operation function via a graphical user interface (GUI). The computer constituting the information processing apparatus 110 receives an input of an operation instruction from the input device 120 via the various screens. The input device 120 is, for example, a keyboard, a mouse, a touch panel, or a microphone for voice input.

As shown in Fig. 16 as an example, an operation program 125 is stored in the storage 115 of the information processing apparatus 110. The operation program 125 is an application program for causing the computer to function as the information processing apparatus 110. In addition to the operation program 125, the concentration prediction model 126 is also stored in the storage 115. The concentration prediction model 126 is, for example, a machine learning model configured by a neural network. The present disclosure is not limited to the neural network, and a decision tree, a random forest, a Naive Bayes, a gradient boosting decision tree, or the like may be used.

In a case in which the operation program 125 is started up, the CPU 117 of the computer constituting the information processing apparatus 110 functions as an acquisition unit 130, a read/write (hereinafter, referred to as RW) control unit 131, a prediction unit 132, and a display control unit 133 in cooperation with the memory 116 and the like.

The acquisition unit 130 acquires the Raman spectral data 27 from the Raman spectrometer 11. The acquisition unit 130 outputs the Raman spectral data 27 to the RW control unit 131.

The RW control unit 131 controls the storage of various types of data into the storage 115 and the read-out of various types of data stored in the storage 115. The RW control unit 131 stores the Raman spectral data 27 from the acquisition unit 130 in the storage 115. In addition, the RW control unit 131 reads out the Raman spectral data 27 and the concentration prediction model 126 from the storage 115 and outputs the readout Raman spectral data 27 and the concentration prediction model 126 to the prediction unit 132. Further, the RW control unit 131 outputs the Raman spectral data 27 to the display control unit 133.

The prediction unit 132 applies the Raman spectral data 27 to the concentration prediction model 126 and outputs a concentration prediction result 135 from the concentration prediction model 126. The concentration prediction result 135 is a result of predicting the concentration of the antibody 17 in the culture supernatant liquid 15A. The prediction unit 132 outputs the concentration prediction result 135 to the display control unit 133.

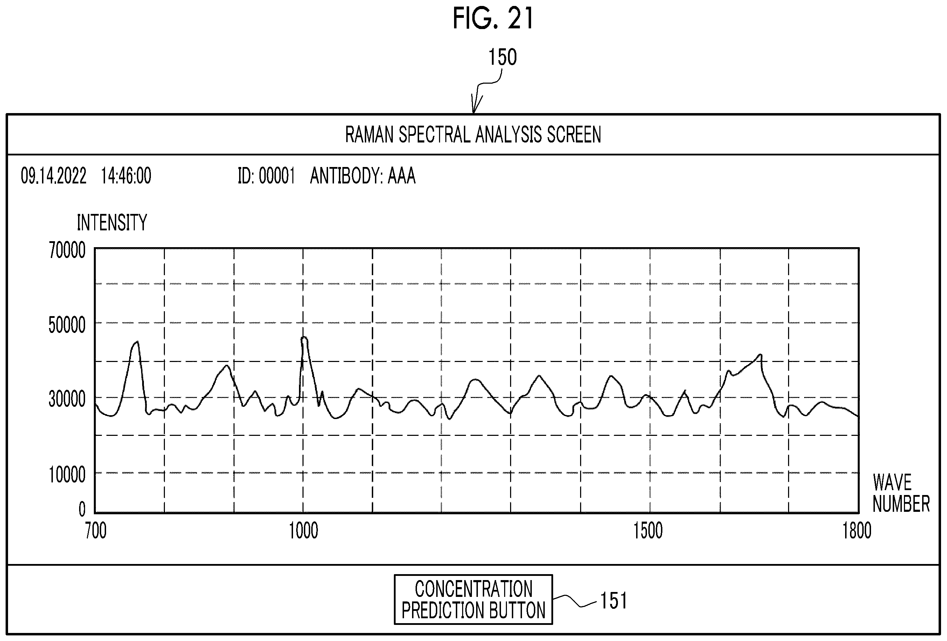

The display control unit 133 controls the display of the various screens on the display 119. For example, the display control unit 133 executes control of displaying a Raman spectral analysis screen 150 (see Fig. 21 and the like) on the display 119.

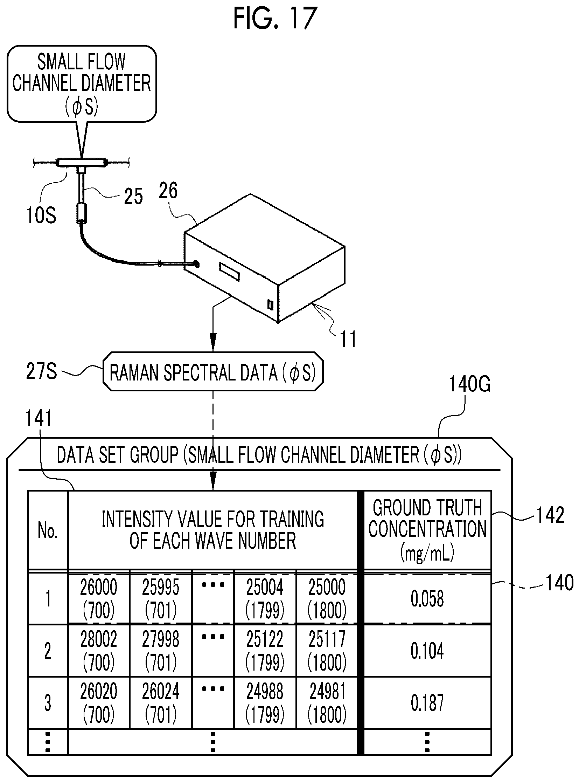

As shown in Fig. 17 as an example, a data set 140 is a set of a intensity value for training 141 and a ground truth concentration 142. A data set group 140G, which is a set of the data sets 140, is prepared for a training phase of the concentration prediction model 126.

The intensity value for training 141 is obtained by copying an intensity value of Raman spectral data 27S measured by using the flow cell 10S including the flow channel 30S having the flow channel diameter φS shown in Fig. 7. The ground truth concentration 142 is calculated based on an amount of the antibody 17 in the culture supernatant liquid 15A for which the Raman spectral data 27S is measured, and a volume of the flow channel 30S. The amount of the antibody 17 is measured, for example, by using a high performance liquid chromatography device.

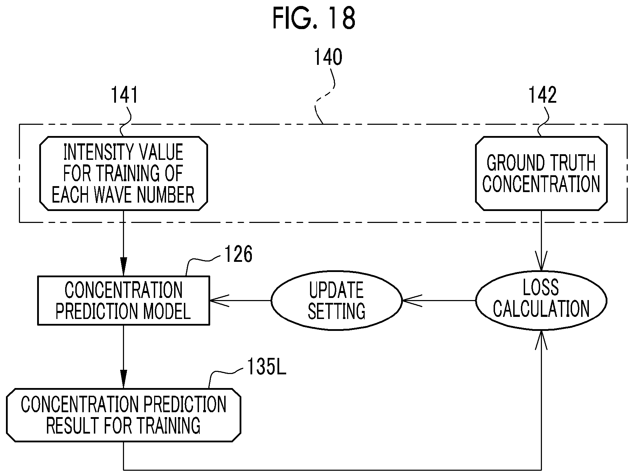

As shown in Fig. 18 as an example, in the training phase of the concentration prediction model 126, the intensity value for training 141 in the data set 140 is input to the concentration prediction model 126, and a concentration prediction result for training 135L is output from the concentration prediction model 126. Next, a loss calculation of the concentration prediction model 126 using a loss function is performed based on a comparison result between the concentration prediction result for training 135L and the ground truth concentration 142. Then, the update setting of coefficients of the concentration prediction model 126 is performed in accordance with a result of the loss calculation, and the concentration prediction model 126 is updated in accordance with the update setting.

In the training phase of the concentration prediction model 126, the series of processing of inputting the intensity value for training 141 to the concentration prediction model 126, outputting the concentration prediction result for training 135L from the concentration prediction model 126, performing the loss calculation, performing the update setting, and updating the concentration prediction model 126 is repeatedly performed while changing the data set 140. The repetition of the series of processing ends in a case in which the prediction accuracy of the concentration prediction result for training 135L with respect to the ground truth concentration 142 reaches a predetermined set level. The concentration prediction model 126 of which the prediction accuracy has reached the set level in this way is stored in the storage 115 and used in the prediction unit 132. It should be noted that, regardless of the prediction accuracy of the concentration prediction result for training 135L with respect to the ground truth concentration 142, the training may end in a case in which the series of processing is repeated a set number of times.

The training of the concentration prediction model 126 may be performed in the information processing apparatus 110 or may be performed in an apparatus different from the information processing apparatus 110. Further, the training of the concentration prediction model 126 may be continued even after the concentration prediction model 126 is stored in the storage 115.

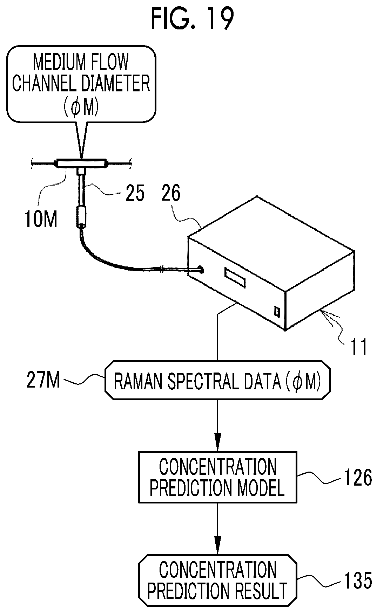

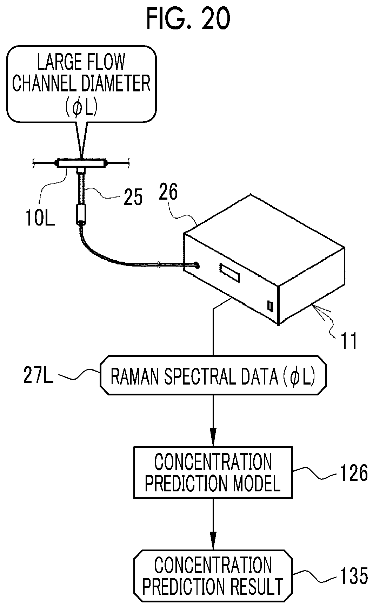

The prediction unit 132 applies the Raman spectral data 27 measured by using the plurality of types of flow cells 10 different from the flow cell 10S including the flow channel 30 having the flow channel diameter φ different from the flow channel diameter φS to the concentration prediction model 126. Then, the concentration prediction result 135 is output from the concentration prediction model 126. More specifically, as shown in Fig. 19 as an example, the prediction unit 132 inputs an intensity value of Raman spectral data 27M measured by using the flow cell 10M including the flow channel 30M having the flow channel diameter φM shown in Fig. 8 to the concentration prediction model 126. Then, the concentration prediction result 135 is output from the concentration prediction model 126. In addition, as shown in Fig. 20 as an example, the prediction unit 132 inputs an intensity value of Raman spectral data 27L measured by using the flow cell 10L including the flow channel 30L having the flow channel diameter φL shown in Fig. 9 to the concentration prediction model 126. Then, the concentration prediction result 135 is output from the concentration prediction model 126. It should be noted that, although not shown, the prediction unit 132 inputs the intensity value of the Raman spectral data 27S measured using the flow cell 10S including the flow channel 30S having the flow channel diameter φS to the concentration prediction model 126, and causes the concentration prediction model 126 to output the concentration prediction result 135.

The display control unit 133 displays, for example, the Raman spectral analysis screen 150 shown in Fig. 21 on the display 119 in response to an instruction from a user of the information processing apparatus 110. The Raman spectral analysis screen 150 displays a graph of the Raman spectral data 27.

A concentration prediction button 151 is provided at a lower part of the Raman spectral analysis screen 150. In a case in which the concentration prediction button 151 is pressed, a concentration prediction instruction is received by the CPU 117 of the information processing apparatus 110. The CPU 117 receives the concentration prediction instruction, causes the prediction unit 132 to execute the processing shown in Figs. 19 and 20, and causes the concentration prediction model 126 to output the concentration prediction result 135.

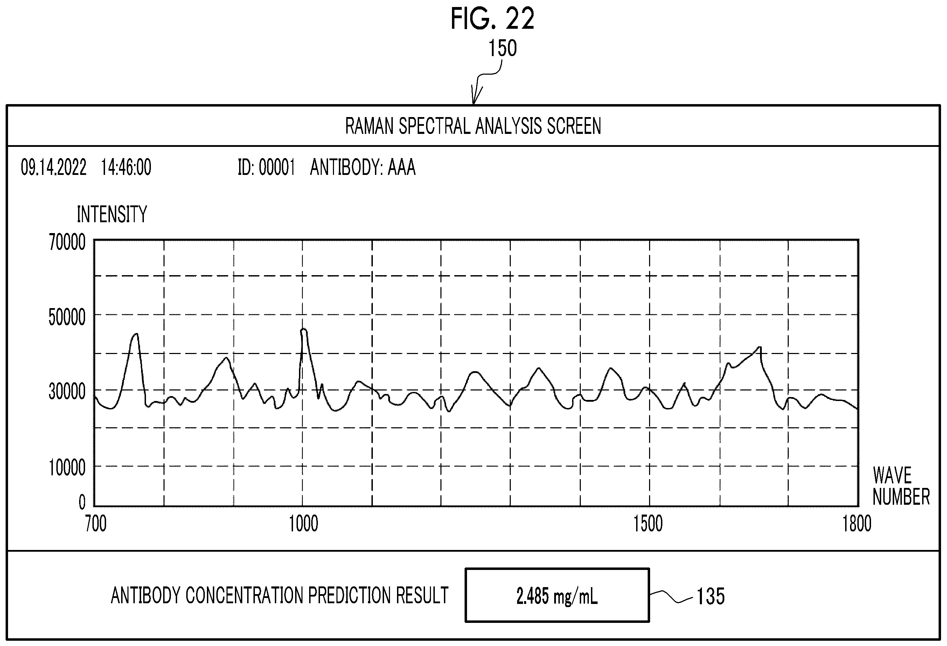

In a case in which the concentration prediction result 135 from the prediction unit 132 is input, the display control unit 133 transitions the display of the Raman spectral analysis screen 150 as shown in Fig. 22 as an example. In Fig. 22, the concentration prediction result 135 is displayed on the Raman spectral analysis screen 150 together with the graph of the Raman spectral data 27.

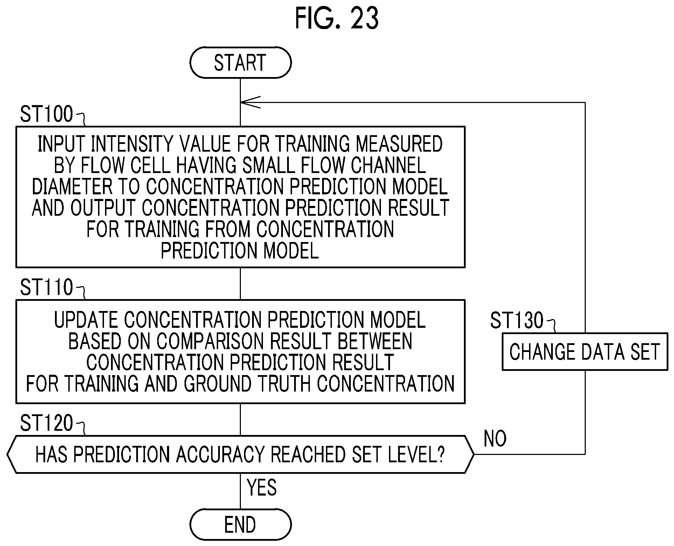

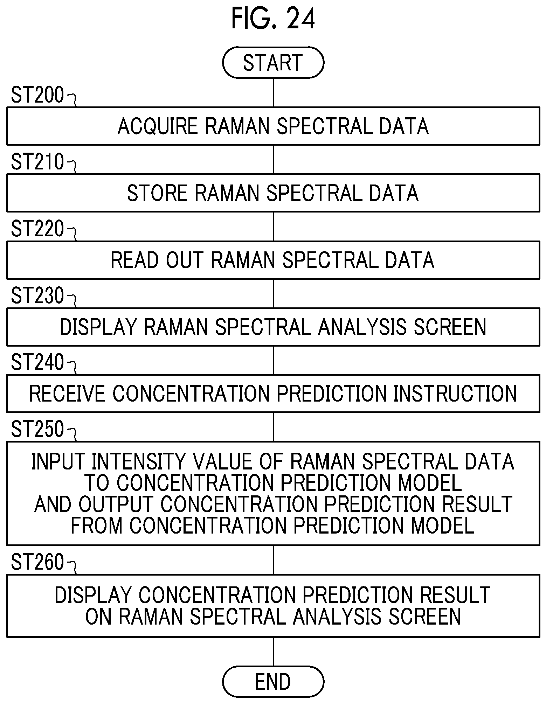

Next, the effects obtained from the second embodiment will be described with reference to flowcharts shown in Figs. 23 and 24 as an example.

First, the concentration prediction model 126 is trained as shown in Fig. 18 by using the data set 140 shown in Fig. 17. That is, the intensity value for training 141 obtained by copying the intensity value of the Raman spectral data 27S measured by using the flow cell 10S including the flow channel 30S having the flow channel diameter φS is input to the concentration prediction model 126, and thereby the concentration prediction result for training 135L is output from the concentration prediction model 126 (step ST100 in Fig. 23). Next, the concentration prediction model 126 is updated based on the comparison result between the concentration prediction result for training 135L and the ground truth concentration 142 (step ST110). The processing of step ST100 and step ST110 is repeatedly performed during a period in which the prediction accuracy of the concentration prediction result for training 135L with respect to the ground truth concentration 142 does not reach the predetermined set level (NO in step ST120), while changing the data set 140 (step ST130). In a case in which the prediction accuracy of the concentration prediction result for training 135L with respect to the ground truth concentration 142 has reached the set level (YES in step ST120), the training of the concentration prediction model 126 ends. The concentration prediction model 126 of which the training ends is stored in the storage 115 of the information processing apparatus 110.

As shown in Fig. 16, the CPU 117 of the information processing apparatus 110 functions as the acquisition unit 130, the RW control unit 131, the prediction unit 132, and the display control unit 133 by starting up the operation program 125.

The concentration prediction model 126 is stored in the storage 115 of the information processing apparatus 110. The concentration prediction model 126 is read out from the storage 115 by the RW control unit 131, and is output to the prediction unit 132.

In the information processing apparatus 110, the Raman spectral data 27 from the Raman spectrometer 11 is acquired by the acquisition unit 130 (step ST200 in Fig. 24). The Raman spectral data 27 is stored in the storage 115 by the RW control unit 131 (step ST210).

The Raman spectral data 27 is read out from the storage 115 by the RW control unit 131 (step ST220), and is output to the prediction unit 132 and the display control unit 133. Then, as shown in Fig. 21, the Raman spectral analysis screen 150 is displayed on the display 119 by the display control unit 133 (step ST230).

The user of the information processing apparatus 110 presses the concentration prediction button 151 in order to cause the concentration prediction model 126 to predict the concentration of the antibody 17 in the culture supernatant liquid 15A for which the Raman spectral data 27 of which the graph is displayed on the Raman spectral analysis screen 150 is measured. Therefore, the concentration prediction instruction is received by the CPU 117 (step ST240).

In response to the concentration prediction instruction, as shown in Figs. 19 and 20, the prediction unit 132 inputs the intensity value of the Raman spectral data 27 to the concentration prediction model 126, and the concentration prediction model 126 outputs the concentration prediction result 135 (step ST250). The concentration prediction result 135 is output from the prediction unit 132 to the display control unit 133, and is displayed on the Raman spectral analysis screen 150 by the display control unit 133, as shown in Fig. 22 (step ST260).

The user makes various decisions by referring to the concentration prediction result 135 displayed on the Raman spectral analysis screen 150. For example, a case will be considered in which a condition setting experiment is being carried out for the culture conditions of the antibody-producing cell 16 by small-scale equipment. In this case, in a case in which the concentration prediction result 135 is worse than a target value, the user makes a decision to stop the current experiment and proceed to an experiment under new conditions. In addition, a case will be considered in which the condition setting experiment ends and the mass production is performed by large-scale equipment. In such a case, in a case in which the concentration prediction result 135 is worse than the target value, the user makes a decision to stop the mass production and perform the maintenance of the culture tank 13.

As described above, in the second embodiment, the CPU 117 of the information processing apparatus 110 uses the concentration prediction model 126 that predicts the concentration of the antibody 17 contained in the culture supernatant liquid 15A. The concentration prediction model 126 is generated by using only the data set 140 including the intensity value for training 141 obtained by copying the intensity value of the Raman spectral data 27S of the antibody 17 or the like contained in the culture supernatant liquid 15A in the flow cell 10S and the ground truth concentration 142 of the antibody 17.

The acquisition unit 130 acquires the Raman spectral data 27M and 27L of the antibody 17 and the like contained in the culture supernatant liquid 15A in the flow cell 10, for example, the flow cells 10M and 10L different from the flow cell 10S. The prediction unit 132 applies the Raman spectral data 27M and 27L to the concentration prediction model 126 and outputs the concentration prediction result 135 of the antibody 17 from the concentration prediction model 126.

The concentration prediction model 126 generated only from the Raman spectral data 27S measured by using the flow cell 10S can be used for predicting the concentration of the antibody 17 based on the Raman spectral data 27M and 27L measured by using the flow cells 10M and 10L different from the flow cell 10S. Therefore, it is possible to save time and effort for preparing the concentration prediction model 126 for each of the plurality of types of flow cells 10, such as the flow cell 10S, the flow cell 10M, and the flow cell 10L.

Only the intensity value of the Raman spectral data 27S of the antibody 17 or the like contained in the culture supernatant liquid 15A in the flow cell 10S is required as the intensity value for training 141 of the data set 140. Therefore, it is possible to easily prepare the data set 140.

The Raman spectral data 27S, 27M, and 27L are measured by the sensor unit 25 including the distal end portion 40 shown in the first embodiment. Therefore, even in a case in which the same measurement target substance is measured, the Raman spectral data 27S, 27M, and 27L are not different from each other, and it is not required to perform correction for eliminating a difference between the Raman spectral data 27S, 27M, and 27L.

The concentration prediction model 126 is not limited to the machine learning model. A model generated by a multivariate analysis or a statistical analysis may be used. Examples of the multivariate analysis and the statistical analysis include multiple regression, principal component regression, partial least squares regression, logistic regression, Lasso regression, ridge regression, support vector regression, and Gaussian process regression. In the model generated by such multivariate analysis and statistical analysis, determining coefficients of a regression equation based on at least two data sets 140 corresponds to "generating a state prediction model using only the data set" such as supplementary note 25 described later.

The Raman spectral data 27 used for generating the data set 140 is not limited to the Raman spectral data 27S shown in the example. The intensity value of the Raman spectral data 27M or the intensity value of the Raman spectral data 27L may be used as the intensity value for training 141 of the data set 140.

The flow rate of the culture supernatant liquid 15A may differ depending on the type of the flow cell 10. However, in such a case, it is preferable to apply the Raman spectral data 27 to the concentration prediction model 126 after correcting the difference in the Raman spectral data 27 due to the difference in the flow rate of the culture supernatant liquid 15A. In a case in which the Raman spectral data 27 used for generating the data set 140 is, for example, the Raman spectral data 27S, the Raman spectral data 27M and 27L are corrected to be data corresponding to the Raman spectral data 27S. For the correction, an conversion formula or a machine learning model need only be used in which the Raman spectral data 27M and 27L are used as data corresponding to the Raman spectral data 27.

The concentration of the antibody 17 in the culture supernatant liquid 15A is predicted, but the present disclosure is not limited to this. The concentration of the aggregate in the culture supernatant liquid 15A may be predicted. Instead of or in addition to the concentration, the concentration or the like may be predicted.

The container to which the distal end portion 40 is attached is not limited to the flow cell 10. The container to which the distal end portion 40 is attached may be, for example, the culture tank 13. In this case, an attachment portion is provided in the culture tank 13, and the distal end portion 40 is attached to the attachment portion. The flow direction in a case in which the container is the culture tank 13 is a flow direction of the cell culture liquid 15 generated by a rotation of a stirring blade in the culture tank 13.

The inner wall surface 63A of the bottom plate 63 of the inner shell portion 56 is the facing wall surface, but the present disclosure is not limited thereto. The distal end portion 40 may be configured only by the outer shell portion 57 without using the inner shell portion 56, and the inner wall surface 64A of the bottom plate 64 of the outer shell portion 57 may be used as the facing wall surface. In this case, the outer shell portion 57 is made of a metal, as in the inner shell portion 56. Alternatively, the outer shell portion 57 is made of a resin, and a metal film such as aluminum, copper, or gold may be formed on the entire surface or a part of the inner wall surface 64A by plating. Further, a metal film is formed on the entire surface or a part of the inner wall surface 66A of the peripheral plate 66 of the outer shell portion 57 by plating. In this way, the metal need only be disposed on at least a part of the surface of the facing wall surface and at least a part of the surface of the side wall surface. However, in order to sufficiently exhibit the effect of reducing the risk in which the S/N ratio of the Raman spectral data 27 is reduced due to the resin, it is preferable that the metal is disposed on the entire surface of the facing wall surface and the entire surface of the side wall surface.

The inner shell portion 56, which is one member, implements the functions of the "facing wall surface" and the "holding portion" according to the present disclosed technology, but the present disclosure is not limited thereto. The bottom plate 63 having the inner wall surface 63A that is the facing wall surface and the other portion of the inner shell portion 56 that functions as the holding portion are originally separate bodies and may be integrated by adhesion, welding, or the like.

The lens having a positive refractive power is not limited to the hemispherical lens 58 shown in the example. A ball lens, a plano-convex lens, a biconvex lens, a cylindrical lens, and the like may be used. In addition, the optical element is not limited to the disk-shaped transparent plate 59 having the emission surface 61 and the incidence surface 62 that are parallel to each other, as shown in the example. A transparent plate having an incidence surface having a shape following a shape of an emission surface, such as a ball lens, a plano-convex lens, and a biconvex lens, and a planar emission surface may be used.

Instead of forming the optical system by joining the lens having a positive refractive power and the optical element, the lens having a positive refractive power and the optical element may be integrally formed as one lens. It should be noted that the optical element need not be provided, and the optical system may be configured only by the lens having a positive refractive power.

A mechanism for changing the interval between the emission surface (emission surface 61 of the transparent plate 59) of the excitation light EL of the optical system 55 and the facing wall surface (inner wall surface 63A), for example, in a stepwise manner may be provided. In this case, the interval between the emission surface of the excitation light EL of the optical system 55 and the facing wall surface is set in accordance with the flow cell 10 having the smallest flow channel diameter φ among the flow cells 10 that are assumed to be used. That is, the interval between the emission surface of the excitation light EL of the optical system 55 and the facing wall surface need not be fixed.

The first connection portion 31 and the second connection portion 32 may be disposed on the lower side of the flow cell 10, and the flow channel 30 may be U-shaped. The shape of the flow cell 10 is not limited to the cylindrical shape, and may be a rectangular tubular shape. The cross-sectional shape of the flow channel 30 is also not limited to the circular shape, and may be an elliptical shape or a rectangular shape. Further, the flow cell 10 or the like may be formed of a composite material such as a carbon fiber reinforced resin.

A substance for which the Raman spectral data 27 is to be measured is not limited to the antibody 17 or the like. The substance for which the Raman spectral data 27 is to be measured may be protein, peptide, nucleic acid (DNA or ribonucleic acid (RNA)), lipid, a virus, a virus subunit, a virus-like particle, and the like other than the antibody 17.

The cell product is not limited to the antibody 17 or the like. Examples of the cell product include cytokine (interferon, interleukin, or the like), hormone (insulin, glucagon, follicle-stimulating hormone, erythropoietin, or the like), a growth factor (insulin-like growth factor (IGF)-1, basic fibroblast growth factor (bFGF), or the like), a blood coagulation factor (seventh factor, eighth factor, ninth factor, or the like), an enzyme (lysosomal enzyme, deoxyribonucleic acid (DNA) degrading enzyme, or the like), a fragment crystallizable (Fc) fusion protein, a receptor, albumin, and a protein vaccine. Examples of the antibody 17 include a bispecific antibody, an antibody-drug conjugate, a low-molecular-weight antibody, and a sugar-chain-modified antibody.

The physical property data is not limited to the Raman spectral data 27. The physical property data may be infrared absorption spectrum data, near infrared absorption spectrum data, nuclear magnetic resonance spectrum data, ultraviolet visible absorption spectroscopy (UV-Vis) spectrum data, or fluorescence spectrum data.

The fluid is not limited to the culture supernatant liquid 15A. The cell culture liquid 15 before being decellularized by the cell removal filter 14 may be used. A cell culture liquid (so-called culture medium) that does not contain the cell product and that is not yet supplied to the culture tank 13 may be used. A purified liquid obtained by purifying the culture supernatant liquid 15A by using the chromatography device in the purification unit may be used. The fluid is not limited to the cell culture liquid 15, and may be, for example, river water collected to investigate water pollution. A raw material (for example, polystyryllithium, a methanol aqueous solution, and the like) and/or a product (for example, a monomer or a polymer such as polystyrene) in a case in which a product, such as a monomer or a polymer (for example, polystyrene or the like), is continuously produced by flow synthesis may be used. The fluid is not limited to liquid, and may be gas.

In a case in which the distal end portion 40 is attached to the flow cell 10, the center CI of the inflow port 70, the center CO of the outflow port 71, and the center CP of the flow channel 30 match each other, but the present disclosure is not limited thereto. In a case in which the flow channel diameter φ is relatively large, the flow cell 10, the sensor unit 25, and the like may be designed such that the center CI of the inflow port 70 and the center CO of the outflow port 71 are located above the center CP of the flow channel 30. In this case, the protrusion amount of the distal end portion 40 or the like with respect to the flow channel 30 can be reduced, and the resistance of the flow of the culture supernatant liquid 15A by the distal end portion 40 or the like can be reduced. Alternatively, the protrusion amount of the distal end portion 40 or the like with respect to the flow channel 30 may be the same regardless of the type of the flow cell 10.

The technologies according to the following supplementary notes can be understood from the above description.

### [Supplementary Note 1]

A sensor unit of a spectroscopic analysis apparatus, the sensor unit comprising: a distal end portion that includes a built-in optical system for irradiating a measurement target substance for physical property data with measurement light to take in return light from the measurement target substance and that is attached to a container for fluid containing the measurement target substance, in which the distal end portion includes a facing wall surface that faces an emission surface of the measurement light of the optical system, and a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

### [Supplementary Note 2]

The sensor unit of a spectroscopic analysis apparatus according to supplementary note 1, in which the container is a flow cell having a flow channel through which the fluid flows.

### [Supplementary Note 3]

The sensor unit of a spectroscopic analysis apparatus according to supplementary note 2, in which the distal end portion is attached to the flow cell containing a resin.

### [Supplementary Note 4]

The sensor unit of a spectroscopic analysis apparatus according to supplementary note 2 or 3, in which the distal end portion is attached to a plurality of types of the flow cells having different flow channel diameters.

### [Supplementary Note 5]

The sensor unit of a spectroscopic analysis apparatus according to any one of supplementary notes 1 to 4, in which a metal is disposed on at least a part of a surface of the facing wall surface.

### [Supplementary Note 6]

The sensor unit of a spectroscopic analysis apparatus according to supplementary note 5, in which an area of the metal on the facing wall surface is larger than an irradiation area of the measurement light on the facing wall surface.

### [Supplementary Note 7]

The sensor unit of a spectroscopic analysis apparatus according to any one of supplementary notes 1 to 6, in which a surface roughness of the facing wall surface is equal to or less than 1.6 µm.

### [Supplementary Note 8]

The sensor unit of a spectroscopic analysis apparatus according to any one of supplementary notes 1 to 7, in which the facing wall surface is a flat surface.

### [Supplementary Note 9]

The sensor unit of a spectroscopic analysis apparatus according to any one of supplementary notes 1 to 7, in which, in a case in which the emission surface side is defined as an upper side and the facing wall surface side is defined as a lower side, the facing wall surface is a curved surface that protrudes to the lower side.

### [Supplementary Note 10]

The sensor unit of a spectroscopic analysis apparatus according to any one of supplementary notes 1 to 9, further comprising: a body portion containing a resin.

### [Supplementary Note 11]

The sensor unit of a spectroscopic analysis apparatus according to any one of supplementary notes 1 to 10, in which the inflow port and the outflow port have a circular shape or a rectangular shape.

### [Supplementary Note 12]

The sensor unit of a spectroscopic analysis apparatus according to any one of supplementary notes 1 to 11, in which a focusing position of the measurement light from the optical system is located between the emission surface and the facing wall surface.

### [Supplementary Note 13]

The sensor unit of a spectroscopic analysis apparatus according to any one of supplementary notes 1 to 12, in which the optical system includes a lens having a positive refractive power.

### [Supplementary Note 14]

The sensor unit of a spectroscopic analysis apparatus according to supplementary note 13, in which the optical system further includes an optical element of which an emission surface of the measurement light is a flat surface.

### [Supplementary Note 15]

The sensor unit of a spectroscopic analysis apparatus according to supplementary note 14, in which a thickness of the optical element in an optical axis direction is equal to or greater than a half of a distance between a point at which an emission surface of the lens intersects an optical axis and a focusing position of the measurement light and equal to or less than the distance.

### [Supplementary Note 16]

The sensor unit of a spectroscopic analysis apparatus according to any one of supplementary notes 1 to 15, in which a metal is disposed on at least a part of a surface of the side wall surface.

### [Supplementary Note 17]

The sensor unit of a spectroscopic analysis apparatus according to any one of supplementary notes 1 to 16, in which an interval between the emission surface and the facing wall surface is fixed.

### [Supplementary note 18]

The sensor unit of a spectroscopic analysis apparatus according to any one of supplementary notes 1 to 17, in which the physical property data is Raman spectral data.

### [Supplementary note 19]

The sensor unit of a spectroscopic analysis apparatus according to any one of supplementary notes 1 to 18, in which a turbidity of the fluid is equal to or greater than 250 NTU and equal to or less than 1000 NTU.

### [Supplementary Note 20]

The sensor unit of a spectroscopic analysis apparatus according to any one of supplementary notes 1 to 19, in which the fluid is a cell culture liquid.

### [Supplementary Note 21]

A measurement system comprising: the sensor unit of a spectroscopic analysis apparatus according to any one of supplementary notes 1 to 20; and the container to which the distal end portion is attached.

### [Supplementary Note 22]

The measurement system according to supplementary note 21, in which, in a case in which the container is the flow cell and the distal end portion is attached to the flow cell, a flow channel through which the fluid flows is present on an inner side and an outer side of the distal end portion.

### [Supplementary Note 23]

The measurement system according to supplementary note 21 or 22, in which, in a case in which the container is the flow cell and the distal end portion is attached to the flow cell, a line connecting centers of the inflow port and the outflow port is parallel to the flow direction.

### [Supplementary Note 24]

A measurement method comprising: measuring the physical property data by using the sensor unit of a spectroscopic analysis apparatus according to any one of supplementary notes 1 to 20.

In addition, the technologies described in the following supplementary notes can be understood from the description of the second embodiment.

### [Supplementary Note 25]

An information processing apparatus comprising: a processor, in which the processor is configured to: use a state prediction model that predicts a state of a measurement target substance contained in fluid and that is generated using only a data set including first physical property data of the measurement target substance contained in the fluid in a first container and ground truth data of the state of the measurement target substance; acquire second physical property data of the measurement target substance contained in the fluid in a second container different from the first container; and apply the second physical property data to the state prediction model to output a prediction result of the state of the measurement target substance from the state prediction model, and the first physical property data and the second physical property data are measured by using a sensor unit of a spectroscopic analysis apparatus, the sensor unit including a distal end portion that includes a built-in optical system for irradiating the measurement target substance with measurement light to take in return light from the measurement target substance and that is attached to the first container and the second container, the distal end portion including a facing wall surface that faces an emission surface of the measurement light of the optical system, and a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

### [Supplementary Note 26]

The information processing apparatus according to supplementary note 25, in which the first container is a first flow cell having a first flow channel that has a first flow channel diameter and through which the fluid flows, and the second container is a second flow cell having a second flow channel that has a second flow channel diameter different from the first flow channel diameter and through which the fluid flows.

### [Supplementary Note 27]

An operation method of an information processing apparatus, the operation method comprising: using a state prediction model that predicts a state of a measurement target substance contained in fluid and that is generated using only a data set including first physical property data of the measurement target substance contained in the fluid in a first container and ground truth data of the state of the measurement target substance; acquiring second physical property data of the measurement target substance contained in the fluid in a second container different from the first container; and applying the second physical property data to the state prediction model to output a prediction result of the state of the measurement target substance from the state prediction model, in which the first physical property data and the second physical property data are measured by using a sensor unit of a spectroscopic analysis apparatus, the sensor unit including a distal end portion that includes a built-in optical system for irradiating the measurement target substance with measurement light to take in return light from the measurement target substance and that is attached to the first container and the second container, the distal end portion including a facing wall surface that faces an emission surface of the measurement light of the optical system, and a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

### [Supplementary Note 28]

An operation program of an information processing apparatus, the operation program causing a computer to execute a process comprising: using a state prediction model that predicts a state of a measurement target substance contained in fluid and that is generated using only a data set including first physical property data of the measurement target substance contained in the fluid in a first container and ground truth data of the state of the measurement target substance; acquiring second physical property data of the measurement target substance contained in the fluid in a second container different from the first container; and applying the second physical property data to the state prediction model to output a prediction result of the state of the measurement target substance from the state prediction model, in which the first physical property data and the second physical property data are measured by using a sensor unit of a spectroscopic analysis apparatus, the sensor unit including a distal end portion that includes a built-in optical system for irradiating the measurement target substance with measurement light to take in return light from the measurement target substance and that is attached to the first container and the second container, the distal end portion including a facing wall surface that faces an emission surface of the measurement light of the optical system, and a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

Here, the CPU 117 is an example of the above-described "processor". The concentration prediction model 126 is an example of the above-described "state prediction model". The concentration is an example of the above-described "state". The flow cell 10S is an example of the above-described "first container" and the above-described "first flow cell". The Raman spectral data 27S and the intensity value for training 141 are examples of the above-described "first physical property data". The ground truth concentration 142 is an example of the above-described "ground truth data".

The flow cells 10M and 10L are examples of the above-described "second container" and the above-described "second flow cell". The Raman spectral data 27M and 27L are examples of the above-described "second physical property data". The concentration prediction result 135 is an example of the above-described "prediction result".

In the second embodiment, for example, the following various processors can be used as a hardware structure of processing units that execute various types of processing, such as the acquisition unit 130, the RW control unit 131, the prediction unit 132, and the display control unit 133. As described above, the various processors include, in addition to the CPU 117, which is a general-purpose processor that executes software (operation program 125) to function as the various processing units, a programmable logic device (PLD), which is a processor of which a circuit configuration can be changed after the manufacturing, such as a field programmable gate array (FPGA), a dedicated electric circuit, which is a processor having a circuit configuration designed exclusively for executing specific processing, such as an application specific integrated circuit (ASIC), and the like.

One processing unit may be configured by one of these various processors, or may be configured by a combination of two or more processors of the same type or different types (for example, a combination of a plurality of FPGAs and/or a combination of a CPU and an FPGA). Furthermore, a plurality of the processing units may be configured by one processor.

As an example in which the plurality of processing units are configured by one processor, first, as represented by a computer, such as a client and a server, there is a form in which one processor is configured by a combination of one or more CPUs and software, and the processor functions as the plurality of processing units. Second, as represented by a system on a chip (SoC) or the like, there is a form in which a processor, which implements the functions of the entire system including the plurality of processing units with a single integrated circuit (IC) chip, is used. As described above, as the hardware structure, the various processing units are configured by using one or more of the various processors described above.

Furthermore, as the hardware structure of the various processors, more specifically, an electric circuit (circuitry) in which circuit elements such as semiconductor elements are combined can be used.

The present disclosed technology can also be combined with various embodiments and/or various modification examples described above, as appropriate. In addition, it goes without saying that the present disclosure is not limited to each of the embodiments described above, various configurations can be adopted as long as the configuration does not deviate from the gist. Further, the present disclosed technology includes, in addition to the program, a storage medium that stores the program in a non-transitory manner.

The above-described contents and the above-shown contents are the detailed description of the parts according to the present disclosed technology, and are merely an example of the present disclosed technology. For example, the above description of the configuration, the function, the operation, and the effect are the description of examples of the configuration, the function, the operation, and the effect of the parts according to the present disclosed technology. Accordingly, it goes without saying that unnecessary parts may be deleted, new elements may be added, or replacements may be made with respect to the above-described contents and the above-shown contents within a range that does not deviate from the gist of the present disclosed technology. In addition, in order to avoid complications and facilitate grasping the parts according to the present disclosed technology, in the above-described contents and the above-shown contents, the description of technical general knowledge and the like that do not particularly require description for enabling the implementation of the present disclosed technology are omitted.

In the present specification, "A and/or B" is synonymous with "at least one of A or B". That is, "A and/or B" means that it may be only A, only B, or a combination of A and B. In addition, in the present specification, also in a case in which three or more matters are expressed in association by "and/or", the same concept as "A and/or B" is applied.

All of the documents, the patent applications, and the technical standards described in the present specification are incorporated herein by reference to the same extent as in a case in which each of the documents, patent applications, and technical standards is specifically and individually described by being incorporated by reference.

## Claims

1. A sensor unit of a spectroscopic analysis apparatus, the sensor unit comprising:
a distal end portion that includes a built-in optical system for irradiating a measurement target substance for physical property data with measurement light to take in return light from the measurement target substance and that is attached to a container for fluid containing the measurement target substance,
wherein the distal end portion includes
a facing wall surface that faces an emission surface of the measurement light of the optical system, and
a holding portion that protrudes from an emission surface side to a facing wall surface side, that holds the facing wall surface in a state in which a space for the fluid to flow is provided between the emission surface and the facing wall surface, and that includes an inflow port and an outflow port for the fluid and side wall surfaces disposed on both sides in a flow direction of the fluid.

2. The sensor unit of a spectroscopic analysis apparatus according to claim 1,
wherein the container is a flow cell having a flow channel through which the fluid flows.

3. The sensor unit of a spectroscopic analysis apparatus according to claim 2,
wherein the distal end portion is attached to the flow cell containing a resin.

4. The sensor unit of a spectroscopic analysis apparatus according to claim 2,
wherein the distal end portion is attached to a plurality of types of the flow cells having different flow channel diameters.

5. The sensor unit of a spectroscopic analysis apparatus according to claim 1,
wherein a metal is disposed on at least a part of a surface of the facing wall surface.

6. The sensor unit of a spectroscopic analysis apparatus according to claim 5,
wherein an area of the metal on the facing wall surface is larger than an irradiation area of the measurement light on the facing wall surface.

7. The sensor unit of a spectroscopic analysis apparatus according to claim 1,
wherein a surface roughness of the facing wall surface is equal to or less than 1.6 µm.

8. The sensor unit of a spectroscopic analysis apparatus according to claim 1,
wherein the facing wall surface is a flat surface.

9. The sensor unit of a spectroscopic analysis apparatus according to claim 1,
wherein, in a case in which the emission surface side is defined as an upper side and the facing wall surface side is defined as a lower side, the facing wall surface is a curved surface that protrudes to the lower side.

10. The sensor unit of a spectroscopic analysis apparatus according to claim 1, further comprising:
a body portion containing a resin.

11. The sensor unit of a spectroscopic analysis apparatus according to claim 1,
wherein the inflow port and the outflow port have a circular shape or a rectangular shape.

12. The sensor unit of a spectroscopic analysis apparatus according to claim 1,
wherein a focusing position of the measurement light from the optical system is located between the emission surface and the facing wall surface.

13. The sensor unit of a spectroscopic analysis apparatus according to claim 1,
wherein the optical system includes a lens having a positive refractive power.

14. The sensor unit of a spectroscopic analysis apparatus according to claim 13,
wherein the optical system further includes an optical element of which an emission surface of the measurement light is a flat surface.

15. The sensor unit of a spectroscopic analysis apparatus according to claim 14,
wherein a thickness of the optical element in an optical axis direction is equal to or greater than a half of a distance between a point at which an emission surface of the lens intersects an optical axis and a focusing position of the measurement light and equal to or less than the distance.

16. The sensor unit of a spectroscopic analysis apparatus according to claim 1,
wherein a metal is disposed on at least a part of a surface of the side wall surface.

17. The sensor unit of a spectroscopic analysis apparatus according to claim 1,
wherein an interval between the emission surface and the facing wall surface is fixed.

18. The sensor unit of a spectroscopic analysis apparatus according to claim 1,
wherein the physical property data is Raman spectral data.

19. The sensor unit of a spectroscopic analysis apparatus according to claim 1,
wherein a turbidity of the fluid is equal to or greater than 250 NTU and equal to or less than 1000 NTU.

20. The sensor unit of a spectroscopic analysis apparatus according to claim 1,
wherein the fluid is a cell culture liquid.

21. A measurement system comprising:
the sensor unit of a spectroscopic analysis apparatus according to any one of claims 1 to 20; and
the container to which the distal end portion is attached.

22. The measurement system according to claim 21,
wherein, in a case in which the container is the flow cell and the distal end portion is attached to the flow cell, a flow channel through which the fluid flows is present on an inner side and an outer side of the distal end portion.

23. The measurement system according to claim 21,
wherein, in a case in which the container is the flow cell and the distal end portion is attached to the flow cell, a line connecting centers of the inflow port and the outflow port is parallel to the flow direction.

24. A measurement method comprising:
measuring the physical property data by using the sensor unit of a spectroscopic analysis apparatus according to any one of claims 1 to 20.
